(19) Europäisches Patentamt
European Patent Office
Office européen des brevets

(11) **EP 1 380 398 B1**

(12) **EUROPEAN PATENT SPECIFICATION**

(45) Date of publication and mention
of the grant of the patent:
**03.05.2006 Bulletin 2006/18**

(51) Int Cl.:
***B29C 33/42*** *(2006.01)* ***B29D 30/06*** *(2006.01)*
***B29C 33/10*** *(2006.01)*

(21) Application number: **03015800.0**

(22) Date of filing: **10.07.2003**

(54) **Method of manufacturing tire mold**

Verfahren zur Herstellung einer Reifenform

Procédé de fabrication d'un moule pour pneumatiques

(84) Designated Contracting States:
**FR IT**

(30) Priority: **12.07.2002 JP 2002204870**

(43) Date of publication of application:
**14.01.2004 Bulletin 2004/03**

(73) Proprietor: **NGK INSULATORS, LTD.**
**Nagoya-City, Aichi Pref. 467-8530 (JP)**

(72) Inventor: **Ishihara, Yasuyuki**
**Nagoya-city,**
**Aichi-prefecture 467-8530 (JP)**

(74) Representative: **TBK-Patent**
**Bavariaring 4-6**
**80336 München (DE)**

(56) References cited:
**EP-A- 1 213 131**      **US-A- 5 349 150**

• **PATENT ABSTRACTS OF JAPAN vol. 1995, no.**
**11, 26 December 1995 (1995-12-26) & JP 07 223224**
**A (KAZUO AIDA;OTHERS: 01), 22 August 1995**
**(1995-08-22)**
• **PATENT ABSTRACTS OF JAPAN vol. 1999, no.**
**11, 30 September 1999 (1999-09-30) & JP 11**
**170267 A (NGK FINE MOLD KK), 29 June 1999**
**(1999-06-29)**

## Description

BACKGROUND OF THE INVENTION

1. Field of the Invention

The present invention relates to a method of manufacturing a tire mold. See, for example US 5,349,150. More particularly, the present invention relates to a method of manufacturing a tire mold capable of simply and effectively manufacturing a slit vent type tire mold, which can discharge air in closed spaces to the outside from slit-shaped air vent holes disposed in the spaces and the like formed between partial molds, at low cost using a plaster casting method.

2. Description of the Related Art

Tire molds are often manufactured by casting, which is suitable to form a complex shape, in correspondence to complex tire design (surface shape) having sharp corner portions and many thin projections called blades.

Exemplified as a specific casting method are a plaster casting method or a ceramic casting method, in which a casting is obtained by low pressure casting or gravity casting using a fragile mold composed of plaster and the like, a die casting method of obtaining a casting by pressurized casting using a non-fragile (permanent) mold composed of steel, etc., and so on.

A tire mold manufactured by the casting as described above is ordinarily divided into partial molds, and these partial molds are used as an overall mold by being combined in their entirety when a tire is molded. As a method of dividing the mold, there are a method of dividing it into two partial molds in a center axis direction (2P mold) and a method of dividing it into 7 to 11 partial molds along a periphery (sectional mold), and these methods can be suitably selected according to manufacturing conditions and the like.

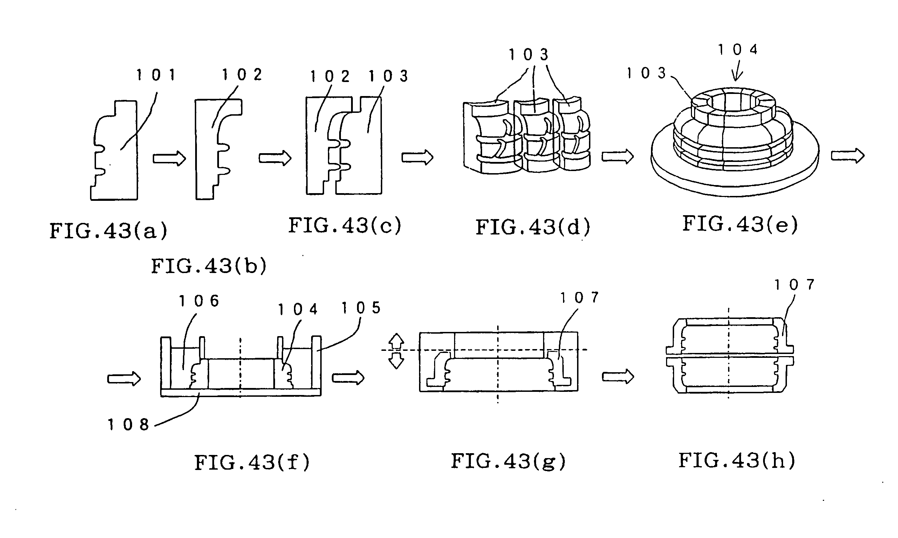

When, for example, the 2P mold is manufactured using the plaster casting method, as shown in FIGS. 43(a) to 43(h), a master model 101, which has a shape constituting a part of the surface shape of a tire as its surface shape, is formed by machining and the like (FIG. 43(a)); a rubber mold 102, which has an inverted shape of the master model 101, is formed (FIG. 43(b)); partial casting molds 103, which have an inverted shape of the rubber mold 102, are formed in necessary number using the rubber mold 102 (FIG. 43(c)); the respective partial casting molds 103 are dried (baked) and the end surfaces thereof are angularly cut so that they can be assembled (FIG. 43(d)); and an overall casting mold 104 for one ring is formed by assembling the respective partial casting molds 103 (FIG. 43(e)). The overall casting mold 104 formed as described above is placed on a surface plate 108 and surrounded by a molding flask 105, a molten alloy 106 is poured into the space between the overall casting mold 104 and the molding flask 105 (FIG. 43(f));

and the molten alloy 106 is hardened (FIG. 43(g)), thereby a tire mold 107 having an inverted shape of a desired tire shape is manufactured (FIG. 43(h)).

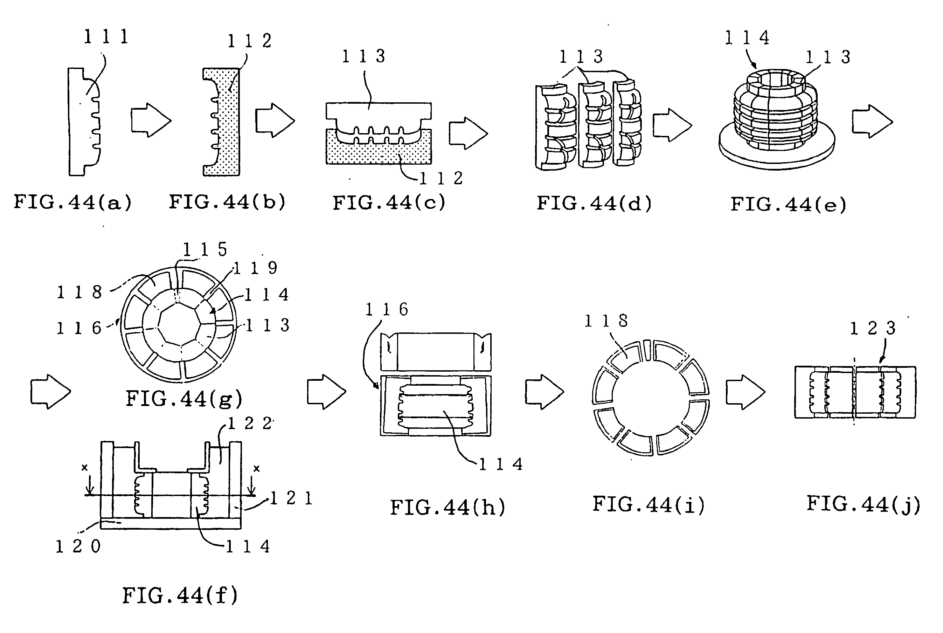

When the sectional mold is manufactured using the plaster casting method, as shown in FIGS. 44(a) to 44(h), a master model 111, which is formed in a basic shape having a size obtained by dividing a desired tire shape into several sections in a peripheral direction, is formed by machining and the like (FIG. 44(a)); a rubber mold 112, which has an inverted shape of the master model 111, is formed (FIG. 44(b)); partial casting molds 113, which have an inverted shape of the rubber mold 112, are formed in necessary number using the rubber mold 11 (FIG. 44(c)); the respective partial casting molds 113 are dried (baked) and the end surfaces thereof are angularly cut so that they can be assembled (FIG. 44(d)); and an overall casting mold 114 for one ring is formed by assembling the respective partial casting molds 113 (FIG. 44(e)). At this time, in order to secure a working margin (finishing allowance) 119 on the end surfaces (sector end surfaces) of respective partial molds (sectors) 118 corresponding to a casting 116 formed in the inverted shape, a working margin is also provided with both the end surfaces of the partial casting molds 113, and an overall casting mold 114 having a predetermined ring diameter is assembled by inserting dummy casting molds 115 between the partial casting molds 113 as necessary. The overall casting mold 114 formed as described above is placed on a surface plate 120 and surrounded by a molding flask 121, and a molten alloy 122 is poured into the space between the overall casting mold 114 and the molding flask 121 and hardened (FIGS. 44 (f) and 44(g)). The overall casting mold 114 is removed from the casting 116 obtained as described above (FIG. 44(h)) and divided into the respective sectors 118, the bottom portions thereof are subjected to milling processing to correct falling, the end surfaces thereof are subjected to milling processing, and the outer peripheral surfaces thereof are subjected to turning processing using a lathe (FIG. 44(i)), thereby a tire mold 123 is manufactured (FIG. 44(j)).

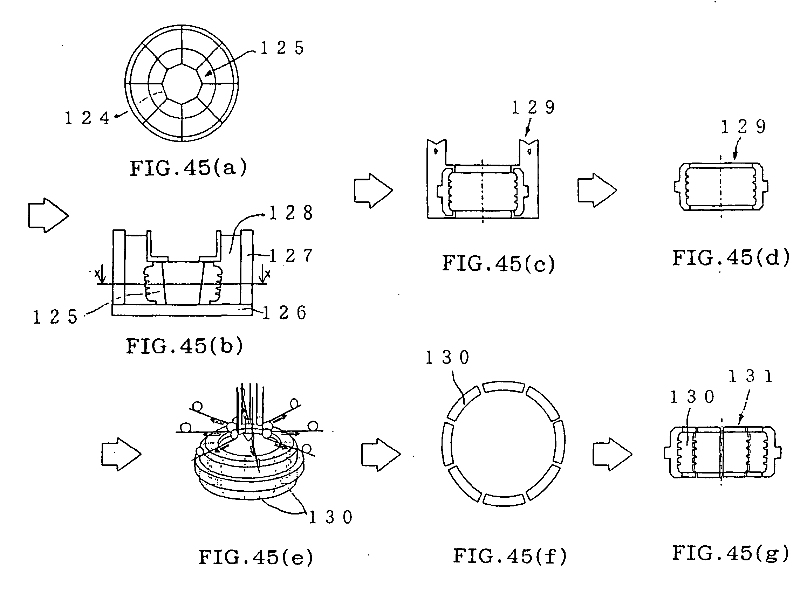

Further, there is another method of manufacturing the sectional mold as described below, in addition to the method of manufacturing it by securing the no working margin (finishing allowance) 119 on the sector end surfaces as shown in FIG. 44(g). According to this method, first, partial casting molds 124 are formed by the method described above, no working margin (finishing allowance) 119 is secured in a process for forming an overall casting mold 125 by combining the partial molds 124, that is, the partial molds 124 are combined in a state in which no extra portion is formed on the end surfaces of the sectors; the overall casting mold 125 arranged as described above is placed of a surface plate 126 and surrounded by a molding flask 127, and a molten alloy 128 is poured into the space between the overall casting mold 125 and the molding flask 127 (FIGS. 45(a) and 45 (b)), thereby a casting 129 having a desired shape is cast (FIG. 45(c)). The casting 129 obtained as described above is removed from the casting mold and machined to remove the extra portion on the back surface thereof (FIG. 45(d)), and divided into partial molds (sectors) 130 using a wire electric discharge machine and the like (FIGS. 45(e) and 45(f)), and the resultant partial molds (sectors) 130 are aligned with each other to thereby manufacture a tire mold 131 (FIG. 45(g)).

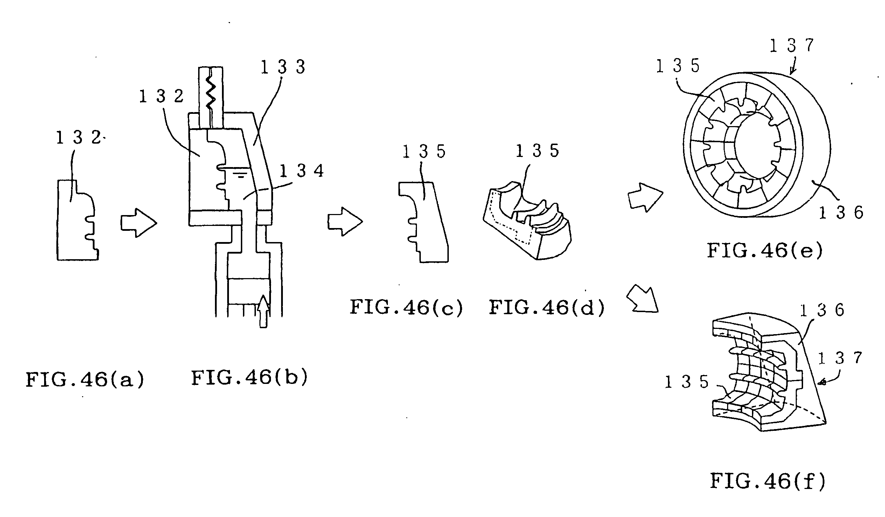

In contrast, when the tire mold is manufactured using the die casting method, as shown in FIGS. 46(a) to 46(f), a master mold (die casting mold) 132, which has a shape having a size obtained by dividing a desired tire shape into several tens of pieces, is formed using steel and the like (FIG. 46(a)), the master mold 132 is surrounded by a molding flask 133, and pressurized casting is executed by pouring a pressurized molten alloy 134 into the space between the master mold 132 and the molding flask 133 (FIG. 46(b)), thereby a piece casting 135 is formed (FIGS. 46(c) and 46(d)). A plurality of duplicated castings are formed by repeating the above process as many times as the necessary number of the piece casting 135. Next, the respective piece castings 135 are machined so that they have a necessary outer peripheral shape, and the tire mold 137 is manufactured by disposing the respective piece castings 135 having been machined in a back mold 136 (FIGS. 46(e) and 46(f)). FIG. 46(e) shows a 2P mold 137 arranged as, and FIG. 46(f) shows a sectional mold 137.

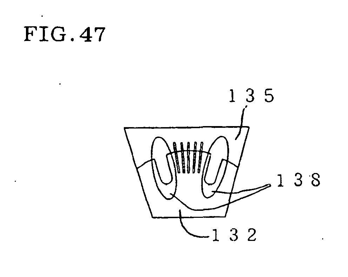

In the die casting method, since the non-fragile (permanent) master mold 132 (refer to FIG. 46(a)) is used as a casting mold, the desired tire shape must be divided into a size without an undercut as the shape of the master mold 132 (refer to FIG. 46(a)). When, for example, the die cast mold 132 has undercut shapes 138 as shown in FIG. 47, the piece casting 135 enters the undercut shapes 138, which makes it difficult for the piece casting 135 to be removed from the master mold 132. Accordingly, in the die casting method, it is essential to form the piece casting 132 in a small size to avoid undercuts when the casting is removed from the mold and to process and assemble the small piece castings in a ring shape.

Since the two kinds of the casting methods described above have an advantage and a disadvantage, respectively, they are selectively used in consideration of use, manufacturing cost, and the like of tires.

For example, the plaster casting method described above has an advantage in that a seamless integral casting, which is in the final level of shape of the tire mold, can be manufactured with high accuracy because casting molds can be assembled and the shape thereof can be corrected in a stage of plaster casting molds. Further, in the plaster casting method, one set of a tire mold can be cast using two rings of the 2P mold and one ring of the sectional mold. In the die casting method, however, one set of a tire mold cannot be unless it is partially cast many times (ordinarily, 50 to 200 times). From the mentioned above, when the dimensional accuracy of a ring casting is taken into consideration, the ring casting manufactured by the plaster casting method has an excellent dimensional accuracy because the dimensional dispersion of the respective portions of the casting obtained by the plaster casting method can be suppressed to a small amount. In contrast, the dimensional accuracy of the ring casting made by the die casting method may be deteriorated by the adverse affect of the dimensional dispersion thereof which is increased in correspondence to the number of times a casting operation is executed.

Further, although it is impossible to apply undercuts in the die casting method, the plaster casting method has a high degree of freedom to an undercut shape because it employs the fragile casting mold.

In contrast, when examination is made from a view point of a solidification mode of the casting, a casting defect may occur on the important designed surface of the casting in the plaster casting mold because the plaster casting mold is formed of an insulating material and thus a molten metal is solidified from the back surface side of the casting toward the designed surface side thereof. However, the die casting method is advantageous in that the casting defect is unlike to occur because the molten metal is solidified also from the designed surface side.

The manufacturing cost of the casting (tire mold) must be determined by comparing the cost of the casting mold made by the plaster casting method with that of the casting mold made by the die casting method. The die casting method may be advantageous when a large number (several thousands or more) of the same casting is manufactured. However, since there is almost no case in which the tire mold is manufactured in the large number, the plaster casting method capable of manufacture the casting mold at low cost is advantageous. Further, since the plaster casting method can manufacture the casting in an almost finished shape, post processing cost can be suppressed.

A tire is ordinarily molded using the tire mold, which is manufactured by the manufacturing methods as described above, by compression molding in which a tire raw material (green tire) composed of a polymerized raw rubber material, and the like are pressed against the tire mold before it is molded (before design is applied thereto).

In the molding process of the compression molding, a problem arises in that when the green tire is pressed against the mold, closed spaces are formed between the surface of the mold, on which irregular portions such as ribs, blades and the like are formed, and the green tire, and the air in the closed spaces is not discharged in molding, finally air bubbles are contained in a finally obtained tire molded product, and an air bubble defect called "bear" is occurs.

A method of venting air from the mold is ordinarily employed to prevent occurrence of the "bear" described above.

Heretofore, there have been employed three kinds of methods (vent hole type, slit vent type and open/close valve type methods) as the method of venting air.

In the vent hole type method, air vent holes communicating with the closed spaces are formed in the mold, and the air in the closed spaces is vented to the outside through the vent holes. This method is advantageous in that the mold itself can be manufactured at low cost as well as a simple blast method of blasting mediums such as glass beads, resin beads, dry ice pellets, and the like onto the air vent holes together with high pressure air can be employed in the maintenance and inspection of air vent holes. However, when the vent hole type method is employed, since the tire low material (green tire) is also flown out together with the vented air, there is a disadvantage in that spews (beard-like projections) are formed in a final tire molded product (tire product) and the outside appearance and the initial traveling performance thereof are deteriorated.

In the slit vent type method, when partial molds are assembled as the overall mold, the air in closed spaces is vented from the spaces formed between the partial molds or from slit-shaped air vent holes formed at predetermined positions. This method is advantageous in that it can provide an excellent outside appearance with the tire molded product and causes no problem in the initial traveling performance thereof. However, the slit vent type method is disadvantageous in that employment of a non-spew type or a slit vent type increases the manufacturing cost of the mold itself.

In an open-close valve type tire mold, an open/close valve mechanism is attached to each of vent holes opened in the mold, the air in closed spaces are vented to the outside from the valves in an open state, and invasion of the tire raw material (green tire) into the vent holes can be prevented by closing the valves simultaneously with that air has been vented. Although the open/close valve type overcomes the problems of the vent hole type and slit vent type tire molds, it has not yet been in widespread use because it is relatively new art.

Of the three types of the methods described above, the slit vent type method is generally employed in the non-spew (spewless) tire mold even at present because there is a fixed idea to the outside appearance of a tire that a jigsaw-puzzle-like divided pattern of a tire mold gives a kind of an aesthetic property to the outside appearance of a tire.

However, since the slit vent type tire mold is arranged to vent air from the spaces formed when piece-shaped partial molds are assembled, the mold is manufactured using the die casting method. However, as described above, the die casting method has the problem in that cost is increased because the piece castings must be processed individually.

Further, it is of course possible to manufacture the slit vent type tire mold by individually manufacturing piece castings using the plaster manufacturing method as manufactured in the die casting method. In this case, however, a problem arises in that the advantage of the plaster casting method of casting a tire mold, which is large in size and has been almost completed, and reducing the number of post processing steps is lost.

Accordingly, an object of the present invention, which was made in view of the above problems, is to provide a method of manufacturing a tire mold capable of simply and effectively manufacturing a slit vent type tire mold, which can discharge air in closed spaces to the outside from slit-shaped air vent holes disposed in spaces and the like formed between partial molds, at low cost using a plaster casting method.

SUMMARY OF THE INVENTION

To achieve the above object, an object of the present invention is to provide a tire mold which will be described below.

[1] In a method of manufacturing a tire mold for forming a plurality of partial casting molds each having a shape constituting a part of the surface shape of a tire as its surface shape, forming an overall casting mold by combining the plurality of partial casting molds so that the shape of the tire is formed by the overall casting mold, and manufacturing the tire mold that is an inverted mold of the tire by surrounding the overall casting mold by a molding flask, and pouring a molten metal into the space between the overall casting mold and the casting frame and hardening the molten metal, the method is characterized by comprising the steps of partitioning the partial casting molds by driving partition sheets each having a thickness of 0.08 mm or less, through ones of the extreme ends thereof, into the profile surfaces of the partial casting molds combined in the shape of the overall casting mold in a direction perpendicular to the profile surfaces of the partial casting molds in a state in which the others of the extreme ends of the partition sheets are kept at a distance of 10 to 50 mm from the inner surface of the molding flask and fixing the partition sheets in the partial casting molds; pouring the molten metal into the space between the overall casting mold and the molding flask and hardening the molten metal to thereby cast a casting that is the inverted mold of the overall casting mold in a state in which the partition sheets are inserted; machining the outer peripheral surface of the casting, removing the partition sheets from the casting, and dividing the casting into piece castings; and combining the piece castings so that they have the shape of the inverted mold of the tire in a state in which intervals for venting air, which have a size corresponding to the thickness of the partition sheets, are formed between the piece castings.

[2] In a method of manufacturing a tire mold for forming a plurality of partial casting molds each having a shape constituting a part of the surface shape of a tire as its surface shape, forming an overall casting mold by combining the plurality of partial casting molds so that the shape of the tire is formed by the overall casting mold, and manufacturing the tire mold that is an inverted mold of the tire by surrounding the overall casting mold by a molding flask, pouring a molten metal into the space between the overall casting mold and the casting frame and hardening the molten metal, the method is characterized by comprising the steps of partitioning the partial casting molds by driving partition cylinders each having a wall thickness of 0.08 mm or less, through ones of the extreme ends thereof, into the profile surfaces of the partial casting molds combined in the shape of the overall casting mold in a direction perpendicular to the profile surfaces of the partial casting molds in a state in which the others of the extreme ends of the partition cylinders are kept at a distance of 10 to 50 mm from the inner surface of the molding flask and fixing the partition cylinder in the partial casting molds; pouring the molten metal into the space between the overall casting mold and the molding flask and hardening the molten metal to thereby cast a casting that is the inverted mold of the overall casting mold in a state in which the partition cylinders are inserted; machining the outer peripheral surface of the casting, removing the partition cylinders from the casting, and dividing the casting into piece castings; and combining the piece castings so that they have the shape of the inverted mold of the tire in a state in which intervals for venting air, which have a size corresponding to the thickness of the partition cylinders, are formed between the piece castings.

[3] In a method of manufacturing a tire mold according to the above paragraph 1 or 2, the method is characterized in that each of the partition sheets or the partition cylinders comprises a sheet-like member that is composed of a material, which has a plastic property and is free from melt loss and fuse to the molten metal, and that is fixed on the surface of the inserted portion of the partition sheet of the partition cylinder except the portion thereof in the vicinity of the surface of the casting mold.

[4] In a method of manufacturing a tire mold according to any of the above paragraphs 1 to 3, the method is characterized in that each of the partition sheets or the partition cylinders has positioning member master models, which are composed of a material free from melt-loss and fuse to the molten metal and fixed to the partition sheet or the partition cylinder in a state in which the positioning member master models intersect the inserted portion of the partition plate or the partition cylinder, piece castings are positioned by inserting positioning members having the same shape as that of the positioning member master models into recessed portions, which are inverted molds of the positioning member master models formed in the casting, and the piece castings are combined with each other so that they are formed in an inverted mold shape of the tire.

[5] In a method of manufacturing a tire mold according to any of the above paragraphs 1 to 4, the method is characterized in that before the outer peripheral surface of the casting is machined, the circularity of the outer peripheral surface of the casting is corrected by applying external force to the casting.

[6] In a method of manufacturing a tire mold according to any of the above paragraphs 1 to 5, the method is characterized in that before the outer peripheral surface of the casting is machined, the diameter of the casting is expanded and corrected as well as the casting is divided into piece castings by machining the outer peripheral surface thereof and aluminum alloy sheets each having a thickness corresponding to an increased amount of the intervals between the piece castings are fixed to the sides of the piece castings.

[7] In a method of manufacturing a tire mold according to any of the above paragraphs 1 to 5, the method is characterized in that before the outer peripheral surface of the casting is machined, the diameter of the casting is reduced and corrected as well as the casting is divided into piece castings by machining the outer peripheral surface thereof.

[8] In a method of manufacturing a tire mold according to any of the above paragraphs 1 to 7, the method is characterized in that the partial casting molds comprise a foamed plaster material.

[9] In a method of manufacturing a tire mold according to any of the above paragraphs 1 to 8, the method is characterized in that the partition sheets or the partition cylinders comprise a steel sheet of a nickel alloy.

[10] In a method of manufacturing a tire mold according to any of the above paragraphs 1 to 9, the method is characterized in that each of the partition sheets or the partition cylinders has a through hole.formed at the inserted portion thereof.

BRIEF DESCRIPTION OF THE DRAWINGS

FIGS. 1(a) to 1(d) are views sequentially explaining processes for manufacturing a tire mold in an embodiment of the present invention (first invention) in the sequence of the processes;
FIGS. 2(a) to 2(g) are views sequentially explaining processes for manufacturing the tire mold in the embodiment of the present invention (first invention);
FIGS. 3(a) to 3(f) are views sequentially explaining processes for driving a partition sheet into an overall casting mold in the embodiment of the present invention (first invention);
FIGS. 4(a) to 4(g) are views sequentially explaining processes for manufacturing the tire mold by machining a casting in the embodiment of the present invention (first invention);

FIGS. 5(a) and 5(b) are perspective view showing the partition sheet used in the embodiment of the present invention (first invention), wherein FIG. 5(a) shows a partition sheet having a thickness-reduced-portion, and FIG. 5(b) shows a partition sheet having a blade;

FIG. 6 is a perspective view showing a process for driving the partition sheet into the overall casting mold in the embodiment of the present invention (first invention);

FIG. 7 is a perspective view showing a bent partition sheet used in the embodiment of the present invention (first invention);

FIG. 8 is a perspective view showing a piece casting formed by the embodiment of the present invention (first invention);

FIGS. 9(a) and 9(b) are views explaining processes for removing the piece casting formed by the embodiment of the present invention (first embodiment);

FIG. 10 is a perspective view showing a partition sheet which is bent in a shape having an undercut and is used in the embodiment of the present invention (first invention);

FIG. 11 is a sectional view showing the piece casting formed by the embodiment of the present invention (first invention);

FIGS. 12(a) and 12(b) are views explaining processes for removing the piece casting formed by the embodiment of the present invention (first embodiment);

FIGS. 13(a) and 13(b) are views explaining processes for removing the piece casting from the casting formed by the embodiment of the present invention (first embodiment);

FIG. 14 is a perspective view showing a casting mold into which a partition sheet, to which a sheet-like member is fixed, is driven in the embodiment of the present invention (first invention);

FIG. 15 is a perspective view showing the partition sheet, to which the sheet-like member is fixed, in the embodiment of the present invention (first invention);

FIG. 16 is a sectional view of each piece casting formed by the embodiment of the present invention (first invention);

FIG. 17 is a perspective view showing a casting mold into which a partition sheet, to which a positioning member master model is fixed, is driven in the embodiment of the present invention (first invention);

FIG. 18 is a perspective view showing a casting mold into which a partition sheet, to which a conical positioning member master model is fixed, is driven;

FIGS. 19(a) and 19(b) are plane views showing a circularity and reference circularity of a ring casting in the embodiment of the present invention (first embodiment);

FIG. 20 is a sectional view showing a method of recovering circularity in the embodiment of the present invention (first invention);

FIGS. 21(a) to 21(c) are sectional views sequentially showing processes for expanding and correcting the diameter of the casting in the embodiment of the present invention (first invention);

FIG. 22 is a sectional view showing a slit of a piece casting having been expanded and corrected in the embodiment of the present invention (first invention);

FIG. 23 is a sectional view showing a slit of the piece casting to which an aluminum alloy sheet is fixed in the embodiment of the present invention (first invention);

FIG. 24 is a plane view showing the piece casting to which the aluminum alloy sheet is fixed used in the embodiment of the present invention (first invention);

FIGS. 25(a) to 25(c) are sectional views sequentially showing processes for reducing and correcting the diameter of the casting in the embodiment of the present invention (first invention);

FIGS. 26(a) to 26(h) are views sequentially explaining processes for manufacturing a tire mold in another embodiment of the present invention (first invention);

FIGS. 27(a) to 27(h) are views sequentially explaining processes for manufacturing a tire mold in an embodiment of the present invention (second invention);

FIG. 28 is a perspective view showing a process for forming a partition cylinder used in the embodiment of the present invention (second invention);

FIG. 29 is a perspective view showing a process for driving the partition sheet in the embodiment of the present invention (second invention) into a casting mold;

FIG. 30 is a sectional view showing a plaster casting mold assembled in a ring shape used in the embodiment of the present invention (first invention);

FIG. 31 is a perspective view showing a partial mold (sector block) formed by the embodiment of the present invention (first invention) and a back mold;

FIGS. 32(a) and 32(b) are views sequentially explaining processes for driving a partition sheet into a casting mold in a method of manufacturing a sectional mold tire mold to which the embodiment of present invention (first embodiment) is applied;

FIGS. 33(a) and 33(b) are views explaining a shape of the tire mold manufactured by each of the above embodiments;

FIGS. 34(a) and 34(b) are a sectional view and a plane view explaining a state in which partition sheets are driven into an overall casting mold in an example 1;

FIG. 35 is a perspective view showing a partition cylinder used in an example 2;

FIGS. 36(a) and 36(b) are a sectional view and a plane view explaining a state in which the partition cylinder is driven into an overall casting mold in the example 2;

FIGS. 37(a) and 37(b) are a sectional view and a plane view explaining a state in which a partition sheet is driven into an overall casting mold in an example 3;

FIGS. 38(a) and 38(b) are a sectional view and a plane view explaining a state in which a partition sheet is driven into an overall casting mold in an example 4;

FIGS. 39(a) and 39 (b) are a perspective view showing a process for forming a positioning member master model used in the example 4;

FIGS. 40(a) and 40(b) are a perspective view showing a process for forming a positioning member master model used in the example 4;

FIG. 41 is a sectional view showing a ring casting used in a six example;

FIG. 42 is a sectional view showing a ring casting used in a seven example;

FIGS. 43(a) to 43(h) are views sequentially explaining processes for manufacturing a 2P mold by a conventional plaster casting method;

FIGS. 44(a) to 44(j) are views sequentially explaining processes for manufacturing a sectional mold by the conventional plaster casting method;

FIGS. 45(a) to 45(g) are views sequentially explaining other processes for manufacturing the sectional mold by the conventional plaster casting method;

FIGS. 46(a) to 46(f) are views sequentially explaining processes for manufacturing a tire mold by a conventional die casting method; and

FIG. 47 is a sectional view showing a die casting mold having undercut shapes and a piece casting manufactured using the die casting mold.

DESCRIPTION OF THE PREFERRED EMBODIMENTS

Embodiments of a method of manufacturing a tire mold of the present invention (first and second inventions) will be specifically described below with reference to the drawings.

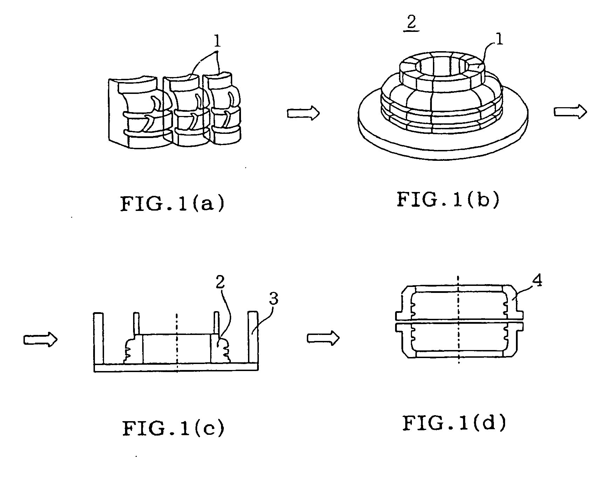

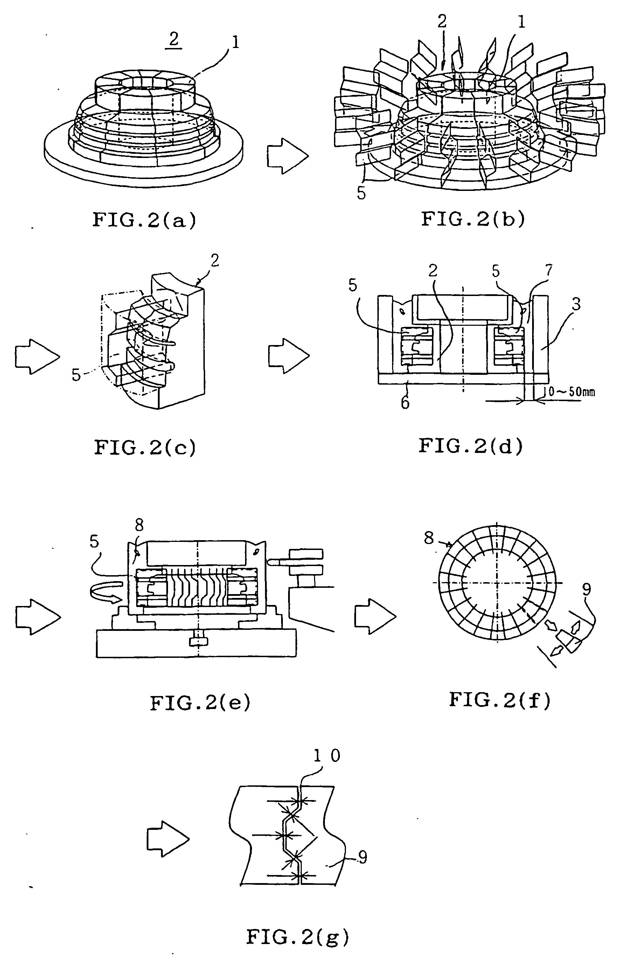

First, a method of manufacturing a tire mold of an embodiment of the present invention (first invention) will be explained. In the method of manufacturing the tire mold of the embodiment, a plurality of partial casting molds 1, each of which has a shape constituting a shape constituting a part of the surface shape of a tire as its surface shape, are formed as shown in FIG. 1(a); an overall casting mold 2 is formed by combining the plurality of partial casting molds 1 so that they form the shape of the tire as shown in FIG. 1(b); the overall casting mold 2 is surrounded by a molding flask 3 and a molten metal 7 is poured into the space between the overall casting mold 2 and the molding flask 3 and hardened as shown in FIG. 1(c) to thereby manufacture a tire mold 4 that is an inverted mold of the tire as shown in FIG. 1(d). This method is characterized in that when the overall casting mold 2 is formed by combining the plurality of partial casting molds 1 so that they form the shape of the tire as shown in FIG. 2(a), partition sheets 5 each having a thickness of 0.08 mm or less are driven, through ones of the extreme ends thereof, into the partial casting molds 1 combined in the shape of the overall casting mold 2 at predetermined positions on the profile surfaces of the partial casting molds 1 so as to traverse preferably closed spaces in design, in which air is liable to be accumulated, in a direction perpendicular to the profile surfaces of the piece casting molds 1 in a state in which the others of the extreme ends of the partition plates 5 keep a distance of 10 to 50 mm from the inner surface of the molding flask 3 (FIG. 1(c) and the partition plates 5 are fixed in the partial casting molds 1 so that the partial casting molds 1 are partitioned as shown in FIGS. 2(b) and 2(c); the overall casting mold 2 is placed on a surface plate 6 and surrounded by the molding flask 3, and the molten metal 7 is poured into the space between the overall casting mold 2 and the molding flask 3 and hardened as shown in FIG. 2(d); a casting 8 that is an inverted mold of the overall casting mold 2 is cast in a state in which the partition sheets 5 are inserted and the outer peripheral surface of the thus obtained casting 8 is machined as shown in FIG. 2(e); the partition sheets 5 are removed from the casting 8 and the casting 8 is divided into piece castings 9 as shown in FIG. 2(f); and the piece castings 9 are combined so as to form the shape of the inverted mold of the tire in a state in which intervals 10, each of which has a size corresponding to the thickness of the partition sheets 5, are formed between the respective piece castings 9 to vent air as shown in FIG. 2(g).

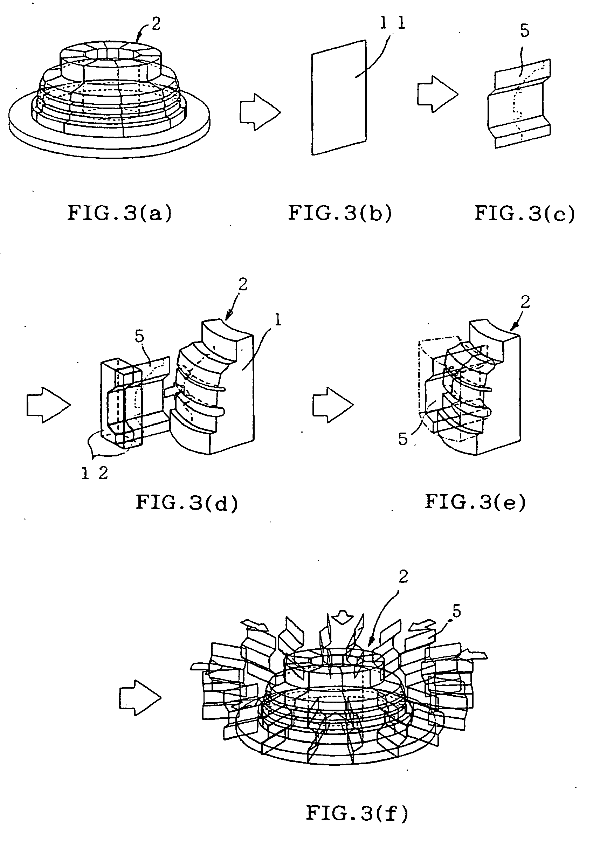

Specifically, first, the overall casting mold 2 as shown in FIG. 3(a) is formed. This embodiment shows the overall casting mold 2 for manufacturing a 2P mold in which the shape of the tire is divided into upper and lower shapes. Foamed plaster and non-foamed plaster can be used as a material for forming the overall casting mold 2, and, in particular, it is preferable to use the foamed plaster having the countless number of air bubbles acting as spaces through which the plaster material can escape into the inside of the overall casting mold 2 when the partition sheets 5 (refer to FIG. 2(c) are driven thereinto. Since the overall casting mold 2 formed of the foamed plaster has a smaller resistance and a plaster material, which is to be discharged when the partition sheets 5 (refer to FIG. 2(c)) are driven into the overall casting mold 2, escapes into air bubbles, no casting mold defect occurs.

Next, as shown in FIGS. 3(b) and 3(c), a raw sheet material 11 formed of steel and the like is bent in a desired shape, preferably so as to traverse the closed spaces in design in which air is liable to be accumulated, and the partition sheets 5 are formed to divide the overall casting mold 2 (refer to FIG. 3(a)) in a peripheral direction. It is preferable to set the thickness of the partition sheets 5 to 0.08 mm or less, and it is more preferable to set the thickness to 0.005 to 0.08 mm. With this arrangement, the intervals 10 (refer to FIG. 2(g)) formed by the partition sheets 5 in the resultant tire mold 4 (refer to FIG. 2(g)) can be used as slits for venting air as well as a tire raw material (green tire) can be prevented from entering the slits. Further, steel and nickel alloys are preferably exemplified as a material of the partition sheets 5 because the material must has strength for enabling it to be easily driven into the overall casting mold 2 (refer to FIG. 3(a)) even if it has a thickness of 0.08 mm or less, can be available in a uniform thickness at relatively low cost, and must be free from melt-loss and fuse when it is inserted into an aluminum alloy.

Although the partition sheets 5 can be used in a flat sheet state without being bent, bending it in a desired shape can increase the area of the slit portions for venting air in the tire mold 4 (refer to FIG. 1(d)).

Further, application of a carbon or boron nitride parting agent to the surfaces of the partition sheets 5 permits the partition sheets 5 to be easily removed from the resultant cast.

Next, as shown in FIG. 3(d), the partition sheets 5 are driven through the ones of the extreme ends thereof into the partial casting molds 1 combined in the shape of the overall casting mold 2 at a predetermined positions on the profile surfaces of the partial casting molds 1 in a direction perpendicular to the profile surfaces and fixed in the partial casting molds 1 in a state in which the other extreme ends of the partition sheets 5 are kept at a distance of 10 to 50 mm from the inner surface of the molding flask 3 (refer to FIG. 2(d)). Locating the extreme ends of the partition sheets 5 at positions less than 10 mm from the inner surface of the molding flask 3 (refer to FIG. 2(d)) is not preferable because a casting defect may be caused by a different amount of the molten metal 7 flowing between the respective partition sheets 5 and by a different run-out state in a ring and further because the casting is liable to be broken and deformed in its shape when it shrinks by being solidified and cooled. Further, a distance therebetween exceeding 50 mm is not also preferable because a casting defect may be caused by an increase in solidifying time of the molten metal and the material is lost in a large amount in casting.

Although the partition sheets 5 can be driven into the overall casting mold 2 as they are, it is preferable to drive the partition sheets 5 into the overall casting mold 2 by fixing them using holders 12 and the like. Further, the partition sheets 5 may be driven while being applied with ultrasonic vibration and the like.

As shown in FIG. 3(e), the partition sheets 5 can be driven into the overall casting mold 2 in a minimum amount capable of supporting them. Further, the partition sheets 5 are driven at positions at which the profile surface of the casting mold can be completely divided and a resultant casting product can be divided over the approximately entire region thereof.

As shown in FIG. 3(f), the partition sheets 5 are driven into the overall casting mold 2 over the entire periphery thereof, that is, over 360° in this embodiment. Although the small number of the partition sheets 5 is shown in FIG. 3(f) for the convenience of illustration, the number of the partition sheets 5 is not limited as long as they can be driven into the overall casting mold 2.

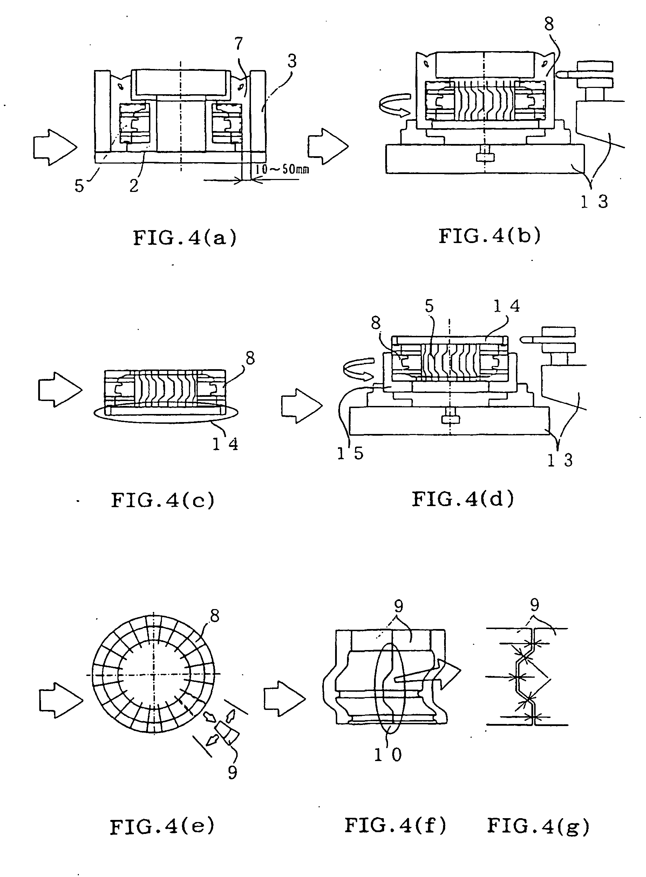

Next, the overall casting mold 2, into which the partition sheets 5 have been driven, is surrounded by the molding flask 3 as shown in FIG. 4(a), and casting is executed by pouring the molten metal 7 between the overall casting mold 2 and the molding flask 3. At this time, it is preferable to provide intervals of 10 to 50 mm between the partition sheets 5 and the inner surface of the molding flask 3. With this arrangement, not only the normal flow of the molten metal can be secured in casting but also coupling force can be secured in the piece castings 9 (refer to FIG. 2(f)) divided by the partition sheets 5 in the casting 8 (refer to FIG. 2(f)) having been cast. In this embodiment, a molten aluminum is used as the molten metal.

Next, as shown in FIG. 4(b), the overall casting mold 2 (refer to FIG. 4(a)) is broken and removed by washing using high pressure water and the like, and the thus obtained casting 8 is loaded on a lathe 13, and a hot top is removed from the casting 8 and the back surface thereof is machined to form its shape. At this time, as shown in FIG. 4(c), the casting 8 is machined by the lathe 13 so that a portion acting as a piece coupling portion 14 (aluminum alloy continuously forming portion) is left at a part of the resultant casting 8.

Next, as shown in FIG. 4(d), the casting 8 is unloaded from the lathe 13 once, fitted into a dedicated holder 15 by being upset vertically, loaded on the lathe 13 again, and the piece coupling portion 14 is machined. In this process, the casting 8 may be machine by a milling machine in place of the lathe 13.

Since the partition sheets 5 inserted into the casting are formed of a material that does not become fused to the casting 8 of the aluminum alloy and the like as shown in FIG. 4(e), the respective piece castings (partial molds) 9 can be easily separated from each other by cutting and removing the piece coupling portion 14. The tire mold is manufactured by fitting the thus obtained piece castings 9 into a back mold.

With this arrangement, a slit vent type tire mold, which can vent air in closed spaces to the outside from slit-shaped air vent holes formed in the intervals 10 formed between the piece castings 9, can be simply and effectively manufactured at low cost by a plaster casting method using the overall casting mold 2 (refer to FIG. 3(a)) having a shape near to the final shape of the tire mold without individually manufacturing the respective piece castings 9 as in a die casting method shown in FIG. 4(f).

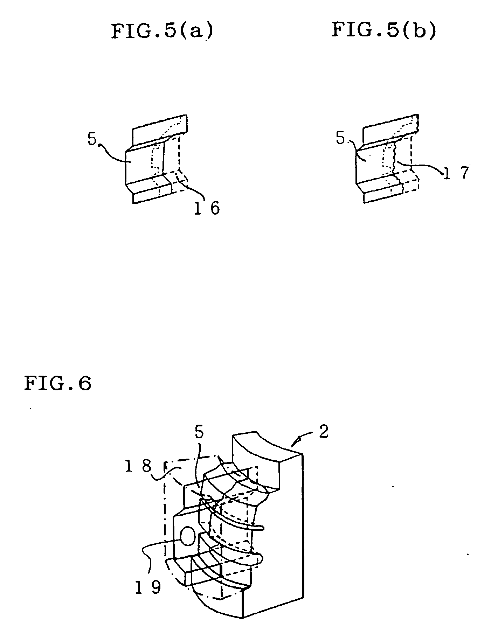

The partition sheet 5 used in the embodiment may be provided with a thickness-reduced-portion 16 formed to the portion thereof to be driven into the overall casting mold 2 (refer to FIG. 3(f)) as shown in FIG. 5(a), or may be provided with a blade 17 for enabling the partition sheet 5 to be easily driven into the overall casting mold 2 as shown in FIG. 5(b).

Further, a partition sheet having a through hole 19 on a product portion 18 side may be driven into the overall casting mold 2 as the partition plate 5 as shown in FIG. 6. Right and left piece castings 9 (refer to FIG. 4 (f)) are coupled with each other through a coupling portion being cast in the through hole 19. With this arrangement, even if the outer peripheral surface of the overall casting mold 2 has been machined, the respective piece castings 9 (refer to FIG. 4(f)) are kept in a ring shape in which they are coupled with each other, the dedicated holder 15 (refer to FIG. 4(d)) is not necessary when the piece castings 9 (refer to FIG. 4(f)) are machined. The piece castings 9 having been machined (refer to FIG. 4(f)) can be separated from each other by striking and breaking the coupling portions formed in the through holes 19. Accordingly, it is preferable to set the diameter of the through hole 19 to about 5 mmφ to 20 mmφ so that the piece castings 9 (refer to FIG. 4(f)) can be kept in the ring state while they are being machined as well as the coupling portions can be easily struck and broken.

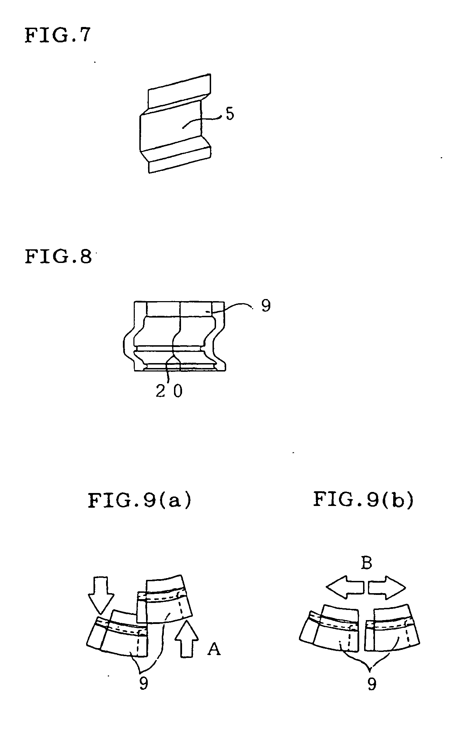

When a partition sheet 5, which is bent in a shape having no undercut in the radial and peripheral directions of the tire, is used as shown in FIG. 7, the respective piece castings 9 of the resultant tire mold have no undercut shape on the surfaces 20 on which they are combined as shown in FIG. 8, thereby the piece castings 9 can be fit into each other from any of the radial direction A and the peripheral direction B of the tire mold as shown in FIGS. 9(a) and 9(b).

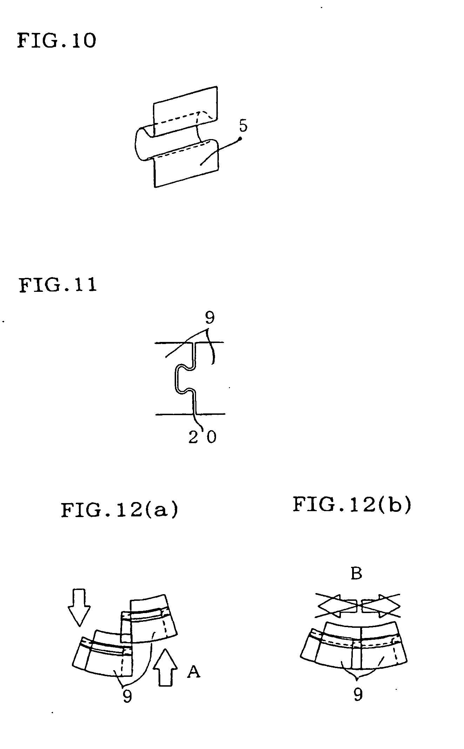

Further, when a partition sheet 5, which is bent in a shape having an undercut only in the peripheral direction of the tire, is used as shown in FIG. 10, an undercut shape is formed on the surface 20, on which the respective piece castings 9 of the resultant tire mold are combined, in the peripheral direction as shown in FIG. 11. Thus, the respective piece castings 9 can be fit into each other in the radial direction A of the tire mold as shown in FIGS. 12(a) and 12(b) but cannot be fitted into each other in the peripheral direction B thereof.

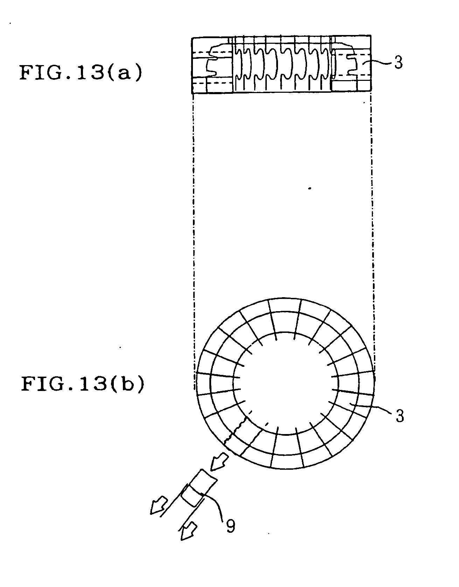

As described above, the piece castings 9 can be tentatively joined to each other in the ring state without being supported or fixed from the outside after they are assembled by using the partition sheets 5 having the undercut shape (refer to FIG. 10), which can improve workability when the piece castings 9 are handled. Specifically, the respective piece castings 9 can be easily transported as one block. Further, since a complex curved surface can be easily applied to the surface 20 (refer to FIG. 11) on which the respective piece castings 9 are combined, the length of the slits can be increased, thereby the air venting capability of the tire mold 4 (refer to FIG. 1) can be improved. When, however, the undercut shapes are formed over the entire periphery of 360° in the manufacturing of the 2P mold tire mold 4 (refer to FIG. 1), since the casting 8 (refer to FIG. 4(e)) cannot be divided into the piece castings 9 (refer to FIG. 4(e)), at least one piece casting 9 of the casting 8 must be formed such that both the end surfaces thereof is parallel to each other as shown in FIGS. 13(a) and 13(b).

A master model of a tire mold, which has been manufactured, can be used as it is as a master model used to form the partial casting molds 1 (refer to FIG. 1 (a)).

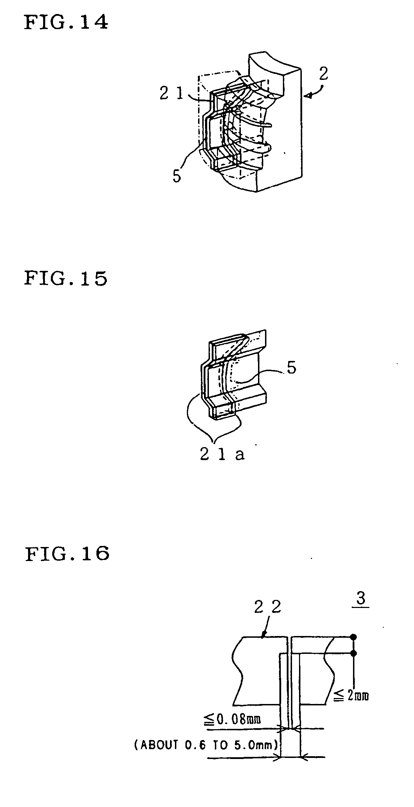

Further, in this embodiment, it is preferable, as shown in FIG. 14, to fix a sheet-like member 21 composed of a material, which has a plastic property and is free from melt-loss and fuse to the molten metal, on the surface of the inserted portion of the partition sheet 5 except the portion thereof in the vicinity of the surface of the overall casting mold 2. For example, an air vent auxiliary plate 21a, which is formed of steel, a nickel alloy, a glass fiber insulating material, and the like bent in correspondence to the shape of the partition sheet 5, can be used as the sheet-like member 21 as shown in FIG. 15. When the steel and nickel alloy are used as the material of the air vent auxiliary plate 21a, they can be joined to the partition sheet 5 by resistance welding and the like, and when the glass fiber insulating material is used as the material thereof, it can be joined to the partition sheet 5 through water glass and an ethyl silicate adhesive.

Further, as shown in FIG. 14, the partition sheet 5, to which the sheet member 21 has been fixed, is driven into the overall casting mold 2 and fixed therein such that the portion of the partition sheet 5, which is not covered with the sheet-like member 21, is not entirely driven but remains on the surface of the overall casting mold 2 in a thickness of about 0.5 to 2.0 mm. With this arrangement, it is possible to reduce the width of the slit in the region of the resultant casting 8, which is located at a depth of 2 mm or less from a design surface 22, and to increase the width of the slit in the region other than the above region as shown in FIG. 16. It is sufficient to reduce the width of the slit only in a very narrow region under the design surface 22 to prevent invasion of the green tire when the tire is molded, and it is preferable to form the slit such that its width is as large as possible in the region other than the above region to permit air to flow well.

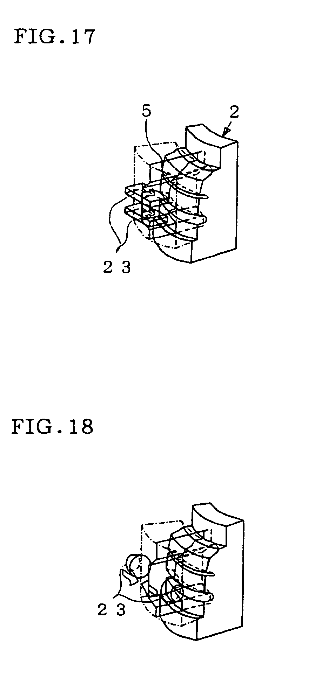

Further, in this embodiment, it is preferable that the partition sheet 5 driven into the overall casting mold 2 have positioning member master models 23, which are composed of a material free from melt-loss and fuse to the molten metal and fixed to the partition plate 5 in a state in which the positioning member master models 23 intersect the inserted portion of the partition plate 5 as shown in FIG. 17. Further, it is preferable that piece castings be positioned by inserting positioning members having the same shape as that of the positioning member master models 23 into recessed portions, which are inverted molds of the positioning member master models 23 formed in the resultant casting (not shown) and that the piece castings be combined with each other so that they are formed in an inverted mold shape of the tire. At this time, the positioning member master models 23 are formed in a shape having no undercut at least in the radial direction or the peripheral direction (tangential direction) of the tire.

Any material can be used as the material for forming the positioning member master models 23 as long as it is free from melt-loss and fuse to the molten aluminum, and steel, a nickel alloy, plaster, a ceramic material, and the like, for example, can be used. When the steel, nickel alloy, and the like are used, they can be joined to the partition sheet 5 by resistance welding and the like, and when the plaster and the ceramic material are used, they can be joined to the partition sheet 5 through water glass and an ethyl silicate adhesive.

The respective piece castings 9 (refer to FIG. 4(e)) manufactured using the partition sheets 5, to which the positioning member master models 23 as described above are fixed, have the recessed portions, which are the inverted molds of the positioning member master models 23, in the regions corresponding to the positioning member master models 23, and the respective piece castings 9 (refer to FIG. 4(e)) can be easily positioned and fixed by inserting the positioning members having the same shape as that of the positioning member master models 23 into the recessed portions. Although the two positioning member master models 23 are fixed to the partition sheet 5 in this embodiment, the number and the fixing position of the positioning member master models 23 are not limited to the above ones. Further, the shape of the positioning member master models 23 is not limited to the sheet shape and may be formed in a conical shape as shown in FIG. 18.

Further, in this embodiment, it is preferable to correct the circularity of the outer peripheral surface of the casting 8 (refer to FIG. 4(e)) by deforming it by external force applied thereto before the outer peripheral surface thereof is machined. When the back surface of the ring casting 8 (refer to FIG. 4(e)) is machined and divided into the piece castings 9 (refer to FIG. 4(e)) without correcting the circularity of the outer peripheral surface thereof, the state of circularity of the ring casting 8 is reflected to the piece castings 9 (refer to FIG. 4(e)) as it is. Thus, the respective piece castings 9 must be assembled while correcting the circularity thereof by machining the back surfaces thereof, which requires a very time-consuming and troublesome job.

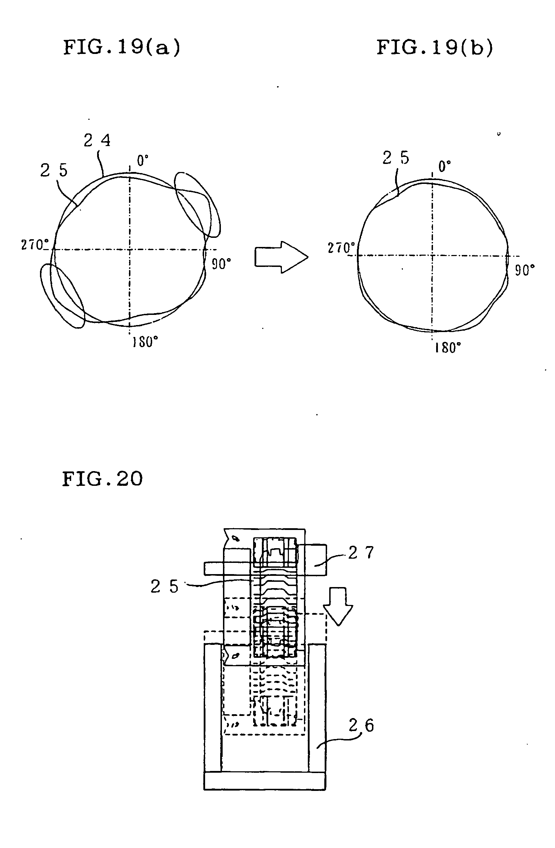

Accordingly, the state of circularity of the design surface is measured before the resultant casting 8 (refer to FIG. 4(e)) is divided into the piece castings 9 (refer to FIG. 4(e)). When the circularity is offset from a reference circularity 24 as shown in, for example, FIG. 19(a), the ring casting 25 is partially deformed by being applied with external force, thereby the circularity characteristics of the ring casting 25 are improved as cast as shown in FIG. 19(b). Thereafter, the ring casting 25 is divided into the piece castings after the outer peripheral surface thereof is machined. A method capable of controlling kinetic energy comparatively accurately such as a collision method of dropping a weight, for example, a sash weight and the like from a predetermined height, a pendulum type hammer striking method of swinging down a pendulum type hammer from a predetermined angular position, and the like can be preferably used as the method of improving the circularity characteristics. FIGS. 19(a) and 19(b) show a case in which the radius of a portion whose circularity is offset from the reference circularity is reduced.

FIG. 20 shows an example of a method of recovering circularity by applying external force to the ring casting 25 by striking the outer peripheral surface thereof. The ring casting 25 is placed at a predetermined height above a stand 26, a fixed hammer 27 is disposed on the inner wall of the ring casting 25, the ring casting 25 is dropped onto the stand 26 together with the slider 27 so that the outer peripheral surface of the ring casting 25 is struck against the bottom surface of the stand 26, thereby the circularity of the ring casting 25 is corrected by increasing the radius of the stuck portion. According to this method, since kinetic energy is defined by the relationship between the self weight and the dropping height of the ring casting 25, when the mechanical characteristics of the ring casting 25 are known, the circularity thereof can be corrected with relatively high accuracy. FIG. 20 shows a case in which the radius of a portion whose circularity is offset from the reference circularity is increased.

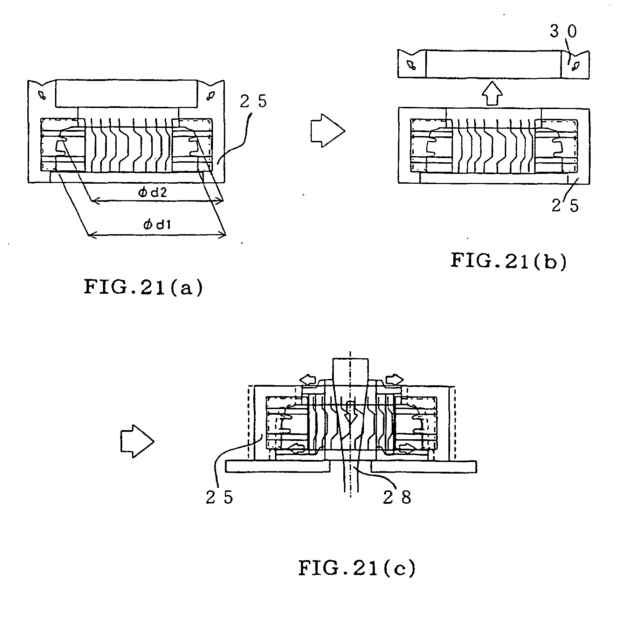

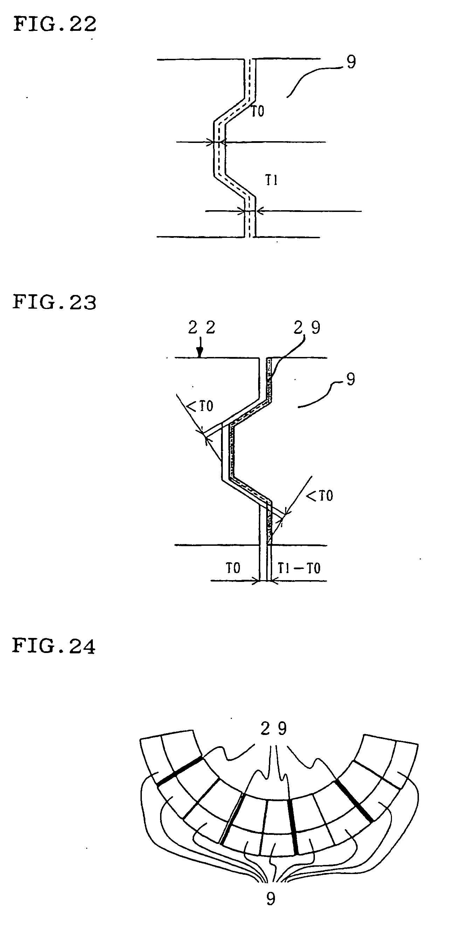

Further, in this embodiment, the diameter of the ring casting 25 may be expanded and corrected before the outer peripheral surface thereof is machined as shown in FIGS. 21(a) to FIG. 21(c) as well as the ring casting 25 may be divided into the piece castings 9 by machining the outer peripheral surface, and an aluminum alloy sheet 29, which has a wall thickness corresponding to an increase amount of the interval between the piece castings 9, may be fixed to a side of each piece casting 9 as shown in FIG. 23.

Specifically, the diameters (inside diameters) of the respective portions of the design surface of the aluminum alloy ring casting 25 obtained by casting are measured as shown in FIG. 21(a). When, for example, diameters $\phi d1$ and $\phi d2$ are smaller than a target diameter and out of an allowable tolerance, after the portions such as a hot top portion 30 and the like on the outer peripheral surface of the ring casting 25 except the minimum necessary portions thereof are cut and removed as shown in FIG. 21(b), the inside diameter of the ring casting 25 is expanded using an inside diameter expander such as a cam type expander 28 and the like as shown in FIG. 21(c). Although illustration is omitted, there are available a hot sizing method and the like as the inside diameter expanding method other than the method of using the cam type expander 28. In the hot sizing method, the ring casting 25 is heated to a predetermined temperature and the inside diameter thereof is expanded by thermal expansion, and a room temperature restricting ring formed of steel and the like is fitted into the ring casting 25 in this expanded state. Then, after the ring casting 25 and the restricting ring are cooled together to a room temperature, the restring ring is removed from the ring casting 25 to thereby expand the inside diameter of the ring casting 25.

Thereafter, the ring casting 25 are divided into the piece castings 9 by the same processes as those shown in FIGS. 2(e) to 2(g). When the thus obtained piece castings 9 are fitted into the back mold and assembled, the width of an inter-piece slit (piece position after the inside diameter is expanded) T1 formed between adjacent piece castings 9 may be set larger than a target width (piece position before the inside diameter is expanded) T0 and may be out of an allowable tolerance range as shown in FIG. 22.

In this case, an aluminum alloy sheet 29 having a thickness corresponding to the increased amount of the slit width (T1 to T0) is bonded and fixed to a side of at least one of the adjacent piece castings 9, and the aluminum alloy sheet 29, which lies off the design surface 22, is trimmed along design as shown in FIG. 23. Friction stirring weld and the like can be used as the boding and fixing method. In this case, however, since the width of a slit, which has a finite angle with respect to a line in a tire width direction, is made smaller than the target width T0, the thickness of only the portion of the aluminum alloy sheet 29 is reduced by chemical etching (chemical milling) and the like.

When a diameter expanding amount is shown by $\Delta D$ and the number of divided pieces in the peripheral direction of a ring casting is shown by N, the theoretical value of the slit width increasing amount $\Delta W$ described above can be calculated using the following expression (1).

$$\Delta W = \Delta D \times \pi/N \ \dots \ (1)$$

As shown in the above expression (1), when the diameter expanding amount $\Delta D$ is small and the number of division N of the pieces of the ring casting 25 (refer to FIG. 21(a)) in ring peripheral direction is large, the slit width increasing amount $\Delta W$ often has a very small value. In this case, workability can be improved by regarding the plurality of piece castings 9 as a single piece and increasing the thickness of the aluminum alloy sheets 29 to be held therebetween.

Necessity for holding the aluminum alloy sheet 29, which has the thickness corresponding to the increased amount of the slit width, between the piece castings 9 basically occurs only when the size of the slit width deviates from about 0.005 to 0.08 mm as a target value due to the correction of diameter of the ring casting 25 (refer to FIG. 21(a)) made by expanding it. Ordinarily, since the diameter expanding amount $\Delta D$ is about 0.1 to 1.0 mm and the number of divided pieces in the peripheral direction of the ring casting 25 is about 50 to 200, the theoretical value of the slit width increasing amount between pieces is about 0.002 to 0.062 mm. When the partition sheet 5 (refer to FIG. 3(f)) to be driven into the overall casting mold 2 (refer to FIG. 3(f)) has a thickness of 0.05 mm and the diameter expanding amount $\Delta D$ is about 0.5 mm or less, the size of the slit width is within the target value at the time the diameter of the ring casting 25 is corrected by expansion, which makes it unnecessary to hold the aluminum alloy sheets 29 between the piece castings 9. In a case in which the thickness of the partition sheets 5 (refer to FIG. 3(f)) to be driven into the overall casting mold 2 (refer to FIG. 3(f)) must be increased and the number of divided pieces in the peripheral direction of the ring casting 25 (refer to FIG. 21(a)) must be reduced as well as a large diameter expanding amount is necessary, the slit width must be adjusted by holding the aluminum alloy sheets 29 between the piece castings 9 because the size of the slit width is increased.

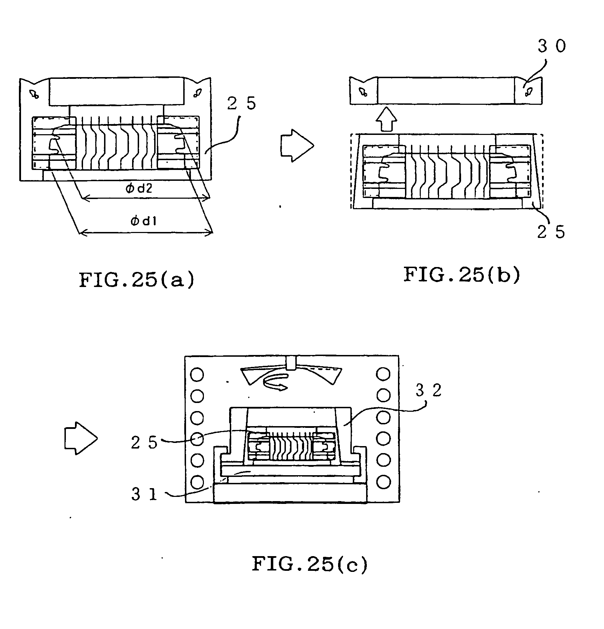

Further, in this embodiment, the diameter of the ring casting 25 may be corrected by reducing it before the outer peripheral surface thereof is machined as well as the ring casting 25 may be divided into the piece castings by machining the outer peripheral surface thereof as shown in FIGS. 25(a) to FIG. 25(c).

As shown in, for example, FIG. 25(a), the diameters (inside diameters) of the respective portions of the design surface of the aluminum alloy ring casting 25 obtained by casting are measured. When, for example, diameters $\phi d1$ and $\phi d2$ are larger than the target diameter and out of the allowable tolerance, portions such as the hot top portion 30 and the like of the ring casting 25 are cut and removed as shown in FIG. 25(b). Then, the ring casting 25 is placed on a surface plate 31 at room temperature after the outer peripheral surface thereof is machined, a restricting ring 32, which is formed of steel and the like, and the inner surface of which has the same shape as that of the outer periphery of the ring casting 25, is fit on the outer periphery of the fixed ring casting 25, and they are charged into a heat treatment furnace as shown in FIG. 25(c). Since the diameter of the ring casting 25 is reduced making use of the difference between the coefficients of thermal expansion of the ring casting 25 and the restricting ring 32, the diameter reducing amount can be managed by the inner diameter of the ring casting 25, a set temperature, and a keeping time.

Thereafter, the ring casting 25 are divided into the piece castings 9 by the same processes as those shown in FIGS. 2(e) to 2(g). With the above arrangement, the respective piece castings 9 are subjected to compression plastic deformation in a peripheral direction, thereby a tire mold having a desired size can be obtained. Further, when the partition sheets 5, which are inserted into the ring casting 25, are formed of steel or a nickel alloy, they are not almost subjected to compression plastic deformation. Thus, it is possible to reduce only the diameter of the ring casting 25 while keeping the size of the slit width between the piece castings.

Next, a method of manufacturing a tire mold of another embodiment of the present invention (first invention) will be explained.

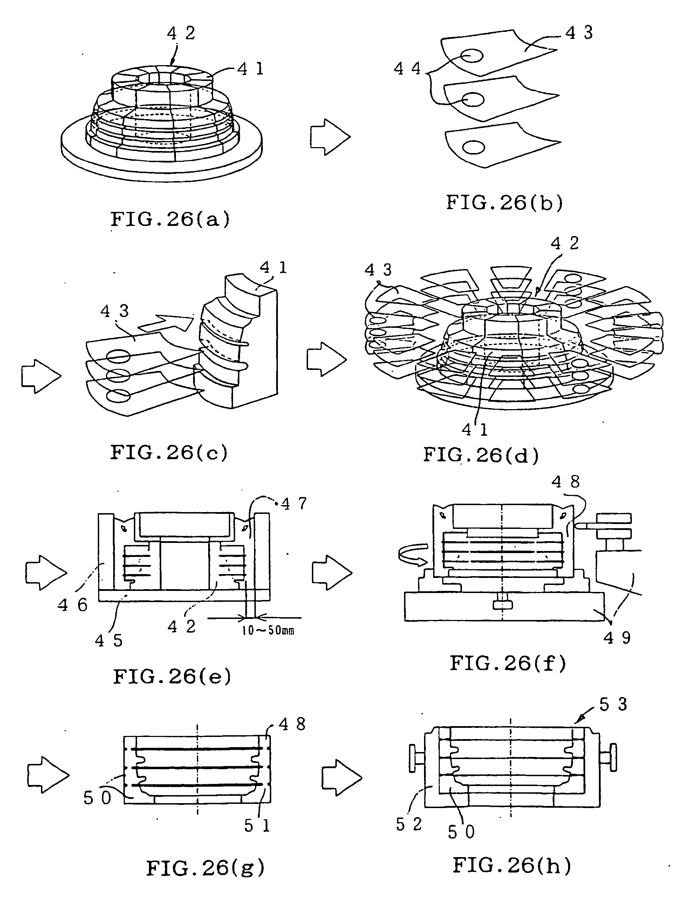

In the method of manufacturing the tire mold of this embodiment, first, an overall casting mold 42 is formed by combining a plurality of partial castings 41 in a shape of a tire as shown in FIG. 26(a). The overall casting mold 42 can be formed by the same method as that of the overall casting mold 2 shown in FIG. 2(a) using the same material as that of the casting mold 2.

Next, as shown in FIG. 26(b), partition sheets 43 having a thickness of 0.08 mm or less are formed of steel or a nickel alloy. At least one through hole 44 is defined through each of the partition sheets 43.

Then, as shown in FIG. 26(c), the partition sheets 43 are horizontally driven into the overall casting mold 42 and fixed therein so that the partial castings 41 are partitioned. At this time, the partition sheets 43 are fixed so as to be vertical to the profile surfaces of the partial castings 41 while keeping the extreme ends of the partition sheets 43 at a distance of 10 to 50 mm from the inner surfaces of the partial castings 41. As shown in FIG. 26(d), the partition sheets 43 are fixed over the entire periphery of the overall casting mold 42 in the same manner so that all the partial castings 41 are partitioned. At this time, it is preferable to minimize the interval, step, and the like between adjacent partition sheets 43.

Next, as shown in FIG. 26(e), the overall casting mold 42 is placed on a surface plate 45 and surrounded by a molding flask 46, a molten metal 47 is poured between the overall casting mold 42 and the molding flask 46 and hardened, and a casting 48 as an inverted mold of the overall casting mold 42 is cast in a state in which the partition sheets 43 are inserted.

Then, as shown in FIG. 26(f), the outer peripheral surface of the resultant casting 48 is machined using a lathe 49.

Next, as shown in FIG. 26(g), the casting 48 having been machined is vibrated from the outer periphery side thereof with a plastic hammer and the like to thereby divide it into piece castings 50. In this embodiment, since the piece castings 50, which have been partitioned by the partition sheets 43, are partially integrated by the through holes 51, the excessive outer peripheral surface portion can be entirely cut in the machining shown in FIG. 26(f). Thereafter, as shown in FIG. 26(h), the inserted partition sheets 43 (refer to FIG. 26(d)) are removed, the respective piece castings 50 are fixed in a back mold 52, and a tire mold 53 is manufactured.

With the above arrangement, there can be simply and effectively manufactured the slit vent type tire mold 53 at low cost using the plaster casting method which can vent the air in closed spaces to the outside from slit-shaped air vent holes disposed in the intervals and the like formed between the piece castings (partial molds) 50.

Further, the partition sheets 43 (refer to FIG. 26 (b)) used in this embodiment may be provided with the sheet-like member 21 shown in FIG. 14 and with the positioning member master model 23 shown in FIG. 17.

Further, in this embodiment, the method of correcting the circularity of the outer peripheral surface of the ring casting 25 as shown in FIGS. 19(a) to 26 may be also used.

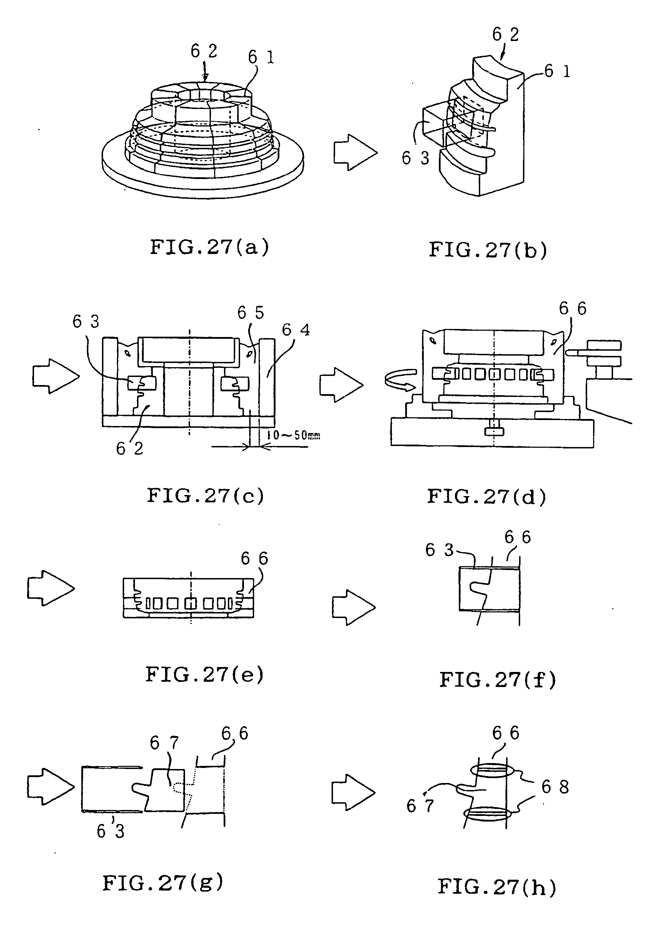

Next, a method of manufacturing a tire mold of an embodiment of the present invention (second invention) will be explained. In the method of manufacturing the tire mold of this embodiment, first, an overall casting mold 62 is formed by combining a plurality of partial casting molds 61 in a shape of a tire as shown in FIG. 27(a). The overall casting mold 62 can be formed by the same method as that the overall casting mold 2 shown in FIG. 2(a) using the same material as that of the casting mold 2.

Next, as shown in FIG. 27(b), partition cylinders 63 having a wall thickness of 0.08 mm or less are driven, through ones of the extreme ends thereof, into the partial casting molds 61 combined in the shape of the overall casting mold 62 at predetermined positions on the profile surfaces of the partial casting molds 61 in a direction perpendicular to the profile surfaces and fixed in the partial casting molds 61 in a state in which the others of the extreme ends of the partition cylinders 63 are kept at a distance of 10 to 50 mm from the inner surface of a molding flask 64, thereby the partial casting molds 61 are partly partitioned. This process is executed over the entire periphery of the overall casting mold 62.

Further, steel and nickel alloy are preferably exemplified as a material of the partition cylinders 63 because the material must have strength for enabling it to be easily driven into the overall casting mold 62 even if it has a thickness of 0.08 mm or less, can be available in a uniform thickness at relatively low cost, and must be free from melt-loss and fuse when it is inserted into an aluminum alloy.

Further, the resultant partial castings can be easily separated from each other by applying a carbon or boron nitride parting agent to the surfaces of the partition cylinders 63.

Next, as shown in FIG. 27(c), the overall casting mold 62, into which the partition cylinders 63 have been driven, is surrounded by the molding flask 64, and casting is executed by pouring a molten metal 65 into the space between the overall casting mold 62 and the molding flask 64. At this time, it is preferable to form an interval of about 10 to 50 mm between the partition cylinders 63 and the inner surface of the molding flask 64. With this arrangement, the molten metal can flow smoothly in casting as well as coupling force of the piece castings divided by the partition cylinders 63 can be secured after they are cast. In this embodiment, a molten aluminum is used as the molten metal 65.

As shown in FIG. 27(d), the overall casting mold is broken and removed by washing using high pressure water and the like, and the thus obtained casting 66 is loaded on a lathe, a hot top is removed from the casting 66 and the back surface thereof is machined to form its shape.

As shown in FIGS. 27(e) to 27(h), the partition cylinders 63 and small partitioned castings 67 partitioned by the partition cylinders 63 are separated from the casting 66 having been machined to a desired shape, and a tire mold is formed by fixing the casting 66 and the small partitioned castings 67 in a back mold (not shown). In this embodiment, intervals 68 having a width corresponding to the wall thickness of the partition cylinders 63 act as slits for venting air.

With the above arrangement, there can be simply and effectively manufactured a slit vent type tire mold at low cost using the plaster casting method which can vent the air in closed spaces to the outside from slit-shaped air vent holes disposed in the intervals and the like formed between the partial molds.

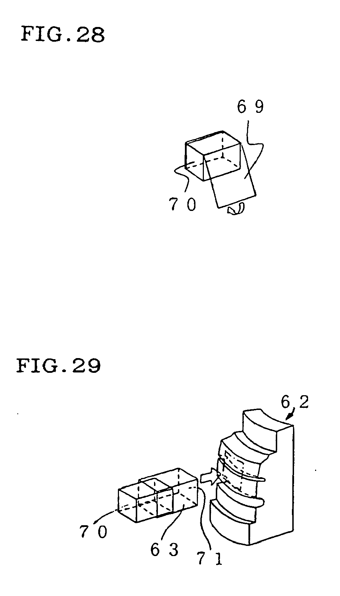

The partition cylinder 63 described above can be formed by bending a sheet-like member 69 while pressing it against a bending mold 70 as shown in FIG. 28. Since the partition cylinder 63 is formed as described above, the partition cylinder 63 can be driven into the overall casting mold 62 in a state in which the bending mold 70 is disposed in the partition cylinders 63 as shown in FIG. 29, thereby the partition cylinder 63 can be easily driven into the overall casting mold 62 as well as deformation of the partition cylinder 63 can be effectively prevented.

Although FIG. 29 shows the partition cylinder 63 which is bent to form the partitioning surface 71 thereof in a square shape, the present invention is by no means limited thereto and the partition cylinder 63 may be bent to form the partitioning surface 71 in a curved line shape such as a circular shape, oval shape, and the like or in other polygonal shapes. Further, the sides of the partition cylinder 63 are curved so that they have no undercut.

Further, in this embodiment, a method of correcting the circularity of the outer peripheral surface of the ring casting 25 as shown in FIGS. 19(a) to 26 may be also used.

Although the manufacturing methods of the tire mold using the plaster casting method have been explained in the respective embodiments of the present invention (first and second inventions) described heretofore, the tire mold can be manufactured by applying the present invention to conventionally used manufacturing methods such as a ceramic molding method and the like. When, for example, the ceramic mold method is used, if a partition sheet and the like cannot be driven into a ceramic mold because the mechanical strength thereof is higher than that of a plaster casting mold, the present invention can be used as it is by holding the partition sheet between partial casting molds. Further, the present invention can be also applied to the die casting method, although it is difficult to simultaneously cast a mold for one ring.

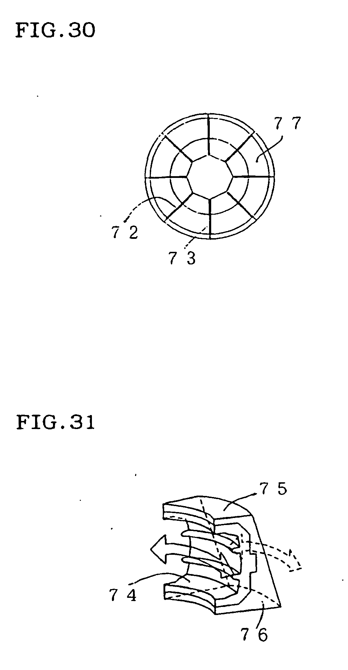

Further, the present invention (first invention) can be applied to a method of manufacturing a sectional mold other than the slit vent type one. Specifically, in a method of manufacturing a sectional mold without excessive portions remaining on the sector end surfaces thereof as shown in FIG. 46, partition sheets 73 are driven into the end surfaces of the respective sectors of plaster casting molds assembled in a ring shape, and the partition sheets 73 are extracted from a thus obtained ring casting, thereby the ring casting can be easily divided into respective piece castings 73 as shown in FIG. 30. With this arrangement, the process for cutting the end surfaces 72 of the sectors of the ring casting by machining them, which is executed in the conventional manufacturing method, can be omitted.

In this case, however, the thickness of the partition sheets 73 must be as large as the clearance of the sector end surface. As shown in FIG. 31, the clearance of the sector end surface means a difference in amounts of thermal expansion between a partial mold (sector block) 74 and a back mold 75. When, for example, the partial mold 74 is formed of an aluminum alloy and the back mold 75 is formed of an iron material, a job for assembling the partial mold 74 into the back mold 75 is ordinarily executed at a room temperature. Since, however, a tire is actually molded at 150° to 200°, when the partial mold 74 is assembled into the back mold 75 with the end surface 76 thereof in intimate contact with the back mold 75 without leaving the clearance therebetween at the room temperature, the aluminum alloy partial mold 74 is thermally expanded more than the iron back mold 75 at the temperature (150° to 200°) used to mold the tire. Thus, the end surface 76 of the partial mold 74 lie off the back mold 75 and preferentially subjected to surface pressure. Accordingly, the partial mold 74 formed of the aluminum alloy having low strength is first liable to be subjected to deformation such as hanging-down, crush, and the like.

The clearance of the sector end surface is set to a width of about 0.15 to 0.30 mm at one position although it is determined depending on the inside diameter of the tire mold and the quality of the aluminum alloy.

Accordingly, when the tire mold is manufactured by dividing the ring casting into the respective piece castings only by extracting the partition sheets 73 from the piece castings without machining them as described above by applying the present invention (first invention), it is preferable to use the partition sheets 73 having a thickness corresponding to the amount of clearance of the sector end surface, specifically, a thickness of about 0.15 to 30 mm.

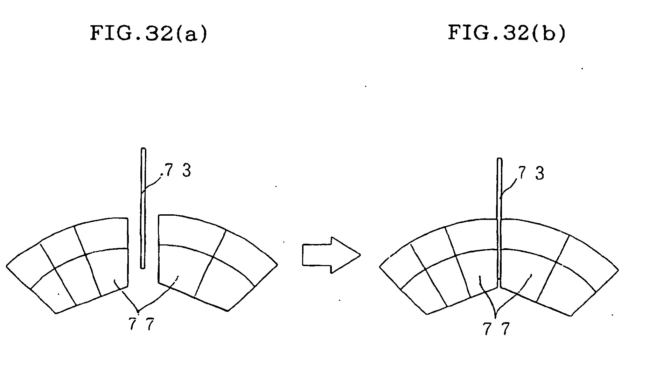

Further, when the tire mold is manufactured as described above, the thickness of the partition sheets 73 is increased as shown in FIG. 30. Thus, it is preferable to change the method of driving the partition sheets 73 into the piece castings 77 to the method of inserting and holding the partition sheets 73 between the piece castings 77 as shown in FIGS. 32(a) and 32(b). With this arrangement, defects of the piece castings 77 caused by driving the partition sheet 73 can be prevented as well as offset of design at portions where the partition sheet 73 are driven can be prevented. Further, when side blades (not shown) are attached to the sector end surfaces, it is not necessary to reinforce the inserted portions of the side blades after the sectors are divided. Accordingly, the shape and size of the side blades to be divided can be strictly defined at the stage of the overall casting mold, thereby the strength of the inserted portions can be easily improved by changing the shape of the inserted portions.

(Examples)

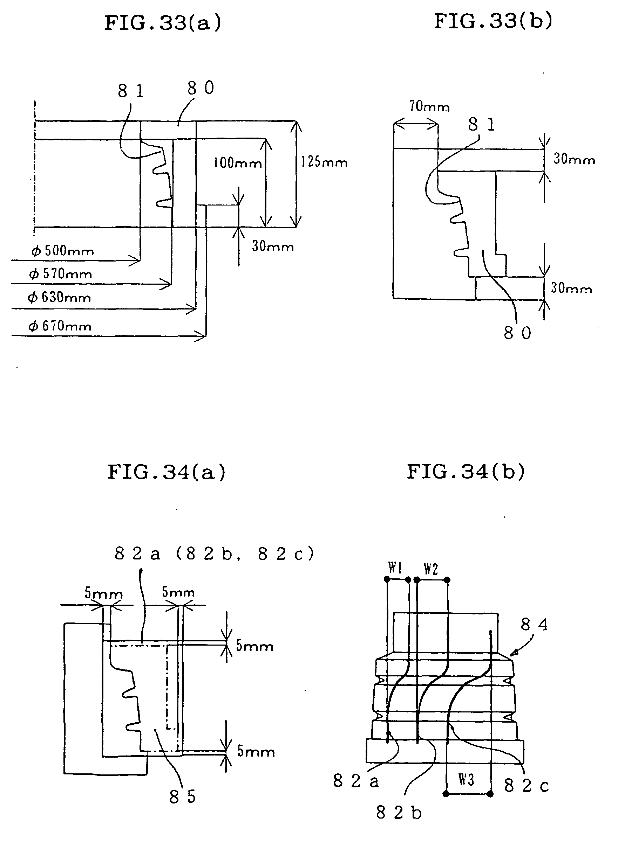

Although the present invention will be explained below more specifically with reference to examples, the present invention is by no means limited thereto. Tire molds 80 having a design surface 81 as shown in FIGS. 33(a) and 33(b) were formed by the respective examples. The tire mold 80 was of a 2P mold type having a tire size of 205/60R13 and composed of partial molds of 24 pitches in total that includes three types of basic pitches S, M, and L, i.e., nine S pitches, nine M pitches, and six L pitches. Further, insertion such as side blades and the like was not provided.

Further, the plaster molding method was used as a basic manufacturing method of the tire mold 80, a rate of shrinkage was set to 11/1000 to 15/1000, and the rate was somewhat changed at respective portions. Used as the material of a plaster casting mold was Hydroperm foamed plaster manufactured by USG that was blended at a water mixing ratio of 70 wt% in a foaming increase amount of 60%. An AC4C alloy (7%Si, 1%Cu, 0.5%Fe, 0.4%Mg, and balance being Al) was used as a casting alloy, and gravity casting (flowing method) was employed as a casting method.

(Example 1)

As shown in FIGS. 34(a) and 34(b), three types of each 24 partition sheets 82a, 82b, and 82c, i.e., 72 partition sheets in total were formed and driven into an overall casting mold 84, which was constructed by assembling partial castings in a ring shape, at predetermined positions. The respective partition sheets 82a, 82b, and 82c were formed of stainless steel SUS 631 having a thickness of 0.04 mm such that the outer peripheries of the partition plates 82a, 82b, and 82c were increased by 5 mm stepwise with respect to a mold product 85. The respective types of the partition sheets 82a, 82b, and 82c were bent so that the bent widths thereof were set to W1 ≈ 30 mm, W2 ≈ 40 mm, and W3 ≈ 50 mm, and the thus bent partition sheets 82a, 82b, and 82c were held by holders (not shown) made by a chemiwood (synthetic wood) and driven into an overall casting mold 84 while applying ultrasonic vibration thereto. A carbon spray was applied to the respective partition sheets 82a, 82b, and 82c before they were driven into the overall casting mold 84. Further, the defects of the overall casting mold 84 caused by driving the respective partition sheets 82a, 82b, and 82c were corrected using fresh plaster.

The overall casting mold 84, into which the respective partition sheets 82a, 82b, and 82c had been driven, were dried again, a ring-shaped molding flask (made of cast steel) was disposed around the respective partition plates 82a, 82b, and 82c at a position apart about 40 mm from the ends thereof, and an AC4C molten alloy (670°) was cast. A resultant casting was divided into 72 piece castings by machining the outer peripheral surface thereof through the same processes as those shown in FIGS. 2(d) to 2(f).

A tire mold 80 (refer to FIG. 33(a)) was manufactured by assembling the piece castings, which had been manufactured as described above, into a predetermined back mold with a gage steel sheet of 10 × 10 × 0.04 mm held therebetween as a shim. The resultant tire mold 80 (refer to FIG. 33(a)) had good air vent characteristics because the portions thereof, where the partition sheets 82 were inserted, were formed as uniform slits of about 0.03 to 0.05 mm.

(Example 2)

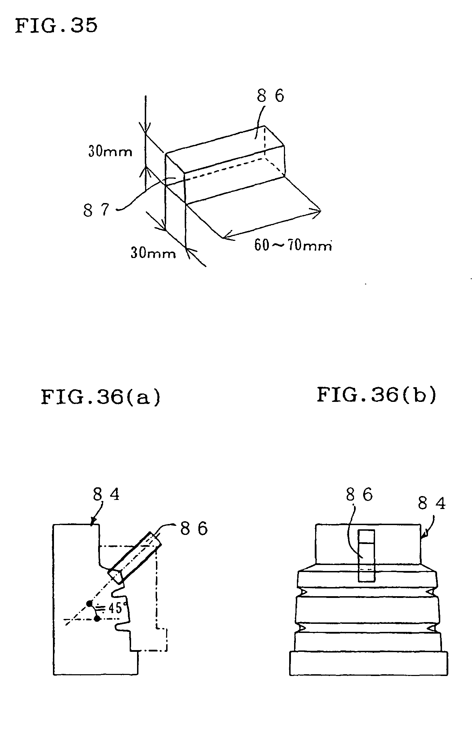

As shown in FIG. 35, 24 partition cylinders 86 each having a partitioning surface (end surface) of 30 × 30 mm and a longitudinal length of 60 to 70 mm, were formed of a stainless steel sheet SUS 631 having a thickness of 0.04 mm.

As shown in FIGS. 36(a) and 36(b), each one partition cylinder 86 was driven into the overall casting mold 84 assembled in the ring shape at every pitch thereof, and thereafter casting was executed similarly to the example 1.

The outer peripheral surface of a resultant casting was machined, the portion thereof surrounded by the partition cylinders 86 was separated, and only the partition cylinders 86 were discarded. Thereafter, a tire mold 80 (refer to FIG. 33(a)) was manufactured by assembling the casting into a back mold. The tire mold 80 (refer to FIG. 33(a)), which had been manufactured as described above, had good air vent characteristics because the portions thereof partitioned by the partition cylinders 86 were formed as slits of square closed-space slits having a width of 0.04 to 0.05 mm.

(Example 3)

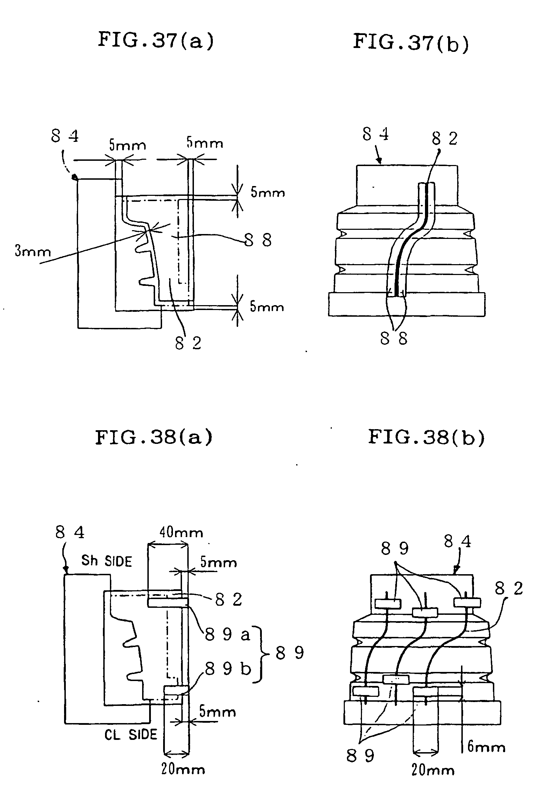

In an example 3, a tire mold 80 (refer to FIG. 33(a)) was manufactured by the same method as that of the example 1 except that a ceramic fiber thickness-reduced-portion 88 of 1 mm thick for venting air was attached to each of partition sheets 82 arranged similarly to those shown in FIG. 34(b) at a position about 3 mm apart from the surface of an overall casting mold 84 on an inserted side as shown in FIGS. 37(a) and 37(b). The thus obtained tire mold 80 had good air vent characteristics because it was provided with air vent portions of about 2 mm wide 3 mm inwardly of a design surface.

(Example 4)

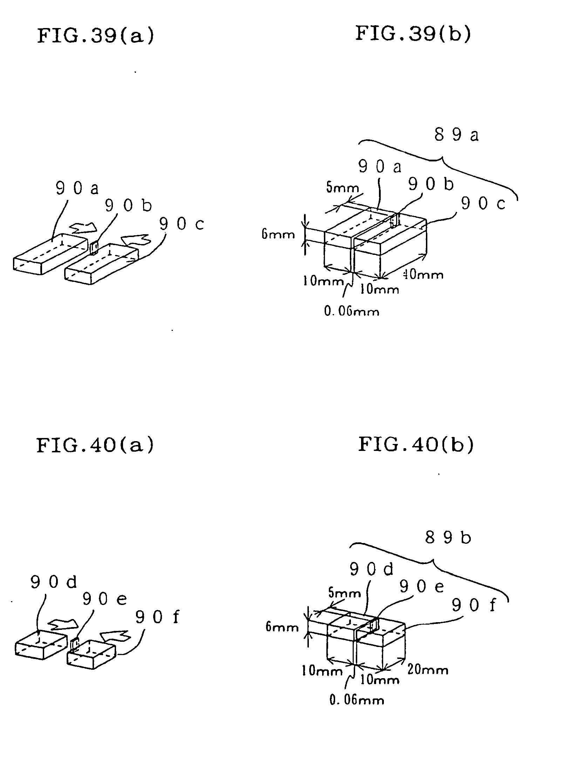

In an example 4, a tire mold 80 (refer to FIG. 33(a)) was manufactured by the same method as that of the example 1 except that each ones of positioning member master models 89a and 89b were disposed to each of partition sheets 82 arranged similarly to those shown in FIG. 34(b) on the shoulder (Sh) side and the center line (CL) side thereof as shown in FIGS. 38(a) and 38(b). As shown in FIGS. 39(a) and 39(b), the Sh side positioning member master model 89a was formed by assembling three angle members 90a, 90b, and 90c formed of stainless steel SUS 631 on a stone surface plate so that they had the same planar shape and by joining them by a water glass water solution. Further, as shown in FIGS. 40(a) and 40(b), the CL side positioning member master model 89b was formed by assembling three angle members 90d, 90e, and 90f formed of stainless steel SUS 631 on the stone surface plate so that they had the same planar shape and by joining them by the water glass water solution. Further, the positioning member master models 89 were joined to the partition sheets 82 also using the water glass water solution.

Since the positioning member master models 89 had cast dowel grooves at inserted portions, the thus obtained tire mold 80 (refer to FIG. 33(a)) could easily fix respective partial molds (piece molds) by fitting assembling dowels having the same shape as that of the positioning member master models 89 into the dowel grooves.

(Example 5)

When a ring casting was cast by the same method as that of the example 1 and the circularity thereof was measured, it was 0.25 mm. The portions of the ring casting, where the radius thereof was increased, were struck by applying the impact load of a pendulum type hammer thereto from an outer periphery side so as to correct the circularity of the ring casting to 0.15 mm, and the corrected ring casting was divided into piece castings by machining the outer peripheral surface thereof. A tire mold 80 (refer to FIG. 33(a)) was manufactured by assembling the resultant partial castings to a back mold. The tire mold 80 had a high degree of circularity of 0.18 mm.

(Example 6)

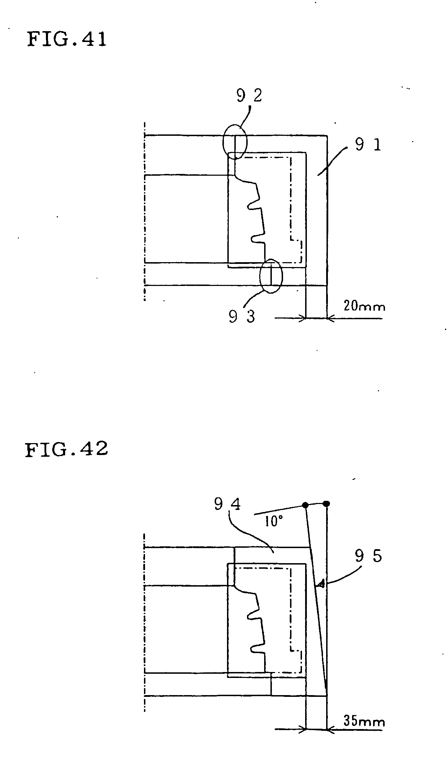

The overall casting mold used in the example 1 was assembled so that the diameter thereof was reduced by 0.4 mm, and a ring casting was cast using the overall casting mold by the same method as that of the example 1. As shown in FIG. 41, the hot top of the resultant ring casting 91 was cut off, and the ring casting 91 was machined to a state in which the back surface thereof had an excessive thickness of about 20 mm. Thereafter, the interiors of the upper and lower portions 92 and 93 of the ring casting 91 were expanded and corrected by a cam type expander (refer to FIG. 21(c)), thereby the inside diameter of the ring casting 91 was expanded. After the ring casting 91 was divided into piece casting molds by machining the outer peripheral surface thereof, the piece casting molds were fitted into a back mold, and a tire mold 80 (refer to FIG. 33(a)) was manufactured.

The ring casting 91 had an average inside diameter offset 0.5 to 0.6 mm from the dimension in a figure and circularity of 0.25 mm before the inside diameter thereof was expanded. However, after the inside diameter of the ring casting 91 had been expanded, the ring casting 91 had the average inside diameter offset 0.1 to 0.2 mm from the dimension in the figure and the circularity of 0.18 mm.

According to the example 6, even if the ring casting 91 having a small inside diameter was manufactured, the tire mold 80 (refer to FIG. 33(a)) having a desired shape could be easily manufactured by expanding and correcting the inside diameter as described above.

(Example 7)

The overall casting mold used in the example 1 was assembled so that the diameter thereof was increased by 0.4 mm, and a ring casting was cast using the overall casting mold by the same method as that of the example 1. As shown in FIG. 42, the feeder of the resultant ring casting 94 was cut off, and the ring casting 94 was machined to a state in which the back surface portion 95 thereof tilted 10° with respect to a vertical direction. The ring casting 94, which had been machined, was fitted into and fixed in a cast steel ring having the same inner surface shape as that of the back surface portion 95 and heated in a heat treatment furnace set to 300° for two hours. Thereafter, the ring casting 94 was cooled with air in the state in which it was fixed in the cast steel ring, thereby the inside diameter thereof was reduced and corrected.

The ring casting 94 had an average inside diameter offset 0.2 to 0.3 mm from the dimension in a figure and circularity of 0.25 mm before the inside diameter thereof was reduced and corrected. However, after the inside diameter of the ring casting 94 had been reduced and corrected, the ring casting 94 had the average inside diameter offset 0.0 to 0.1 mm from the dimension in the figure and the circularity of 0.26 mm.

According to the example 7, even if the ring casting 94, which had a large inside diameter, was manufactured, a tire mold 80 (refer to FIG. 33(a)) having a desired shape could be easily manufactured by reducing and correcting the inside diameter as described above.

As described above, there can be simply and effectively manufactured the slit vent type tire mold by the present invention at low cost using the plaster casting method which can vent the air in closed spaces to the outside from slit-shaped air vent holes disposed in the intervals and the like formed between the partial molds.

In a method of manufacturing a tire mold, casting is executed by partitioning partial casting molds 1 by driving partition sheets 5 each having a thickness of 0.08 mm or less, through ones of the extreme ends thereof, into the profile surfaces of the partial casting molds 1 combined in the shape of an overall casting mold 2 in a direction perpendicular to the profile surfaces of the partial casting molds 1 in a state in which the others of the extreme ends of the partition sheets 5 are kept at a distance of 10 to 50 mm from the inner surface of a molding flask 3 and fixing the partition sheets 5 in the partial casting molds, the partition plates 5 are removed from a resultant casting 8 and the casting 8 is divided into piece castings 9, and the piece castings 9 are combined so that they have the shape of the inverted mold of a tire in a state in which intervals 10 for venting air, which have a size corresponding to the thickness of partition sheets, are formed between the piece castings. With this arrangement, there can be provided the method of producing a tire mold capable of producing simply and effectively a slit vent type tire mold at low cost using a plaster casting method which can vent the air in closed spaces to the outside from slit-shaped air vent holes disposed in the intervals formed between the partial molds.

## Claims

1. A method of manufacturing a tire mold for forming a plurality of partial casting molds (1, 41, 61, 77, 103, 113, 124) each having a shape constituting a part of the surface shape of a tire as its surface shape, forming an overall casting mold (2, 42, 62, 84, 104, 114, 125) by combining the plurality of partial casting molds (1, 41, 61, 77, 103, 113, 124) so that the shape of the tire is formed by the overall casting mold (2, 42, 62, 84, 104, 114, 125), and manufacturing the tire mold that is an inverted mold of the tire by surrounding the overall casting mold (2, 42, 62, 84, 104, 114, 125) by a molding flask (3, 46, 64, 105, 121, 127, 133), and pouring a molten metal (7, 47, 65, 106, 122, 128, 134) into the space between the overall casting mold (2, 42, 62, 84, 104, 114, 125) and the casting frame and hardening the molten metal (7, 47, 65, 106, 122, 128, 134), **characterized by** comprising the steps of:

   partitioning the partial casting molds (1, 41, 61, 77, 103, 113, 124) by driving partition sheets (5, 43, 73, 82a, 82b, 82c) each having a thickness of 0.08 mm or less, through ones of the extreme ends thereof, into the profile surfaces of the partial casting molds (1, 41, 61, 77, 103, 113, 124) combined in the shape of the overall casting mold (2, 42, 62, 84, 104, 114, 125) in a direction perpendicular to the profile surfaces of the partial casting molds (1, 41, 61, 77, 103, 113, 124) in a state in which the others of the extreme ends of the partition sheets (5, 43, 73, 82a, 82b, 82c) are kept at a distance of 10 to 50 mm from the inner surface of the molding flask (3, 46, 64, 105, 121, 127, 133) and fixing the partition sheets (5, 43, 73, 82a, 82b, 82c) in the partial casting molds (1, 41, 61, 77, 103, 113, 124); pouring the molten metal (7, 47, 65, 106, 122, 128, 134) into the space between the overall casting mold (2, 42, 62, 84, 104, 114, 125) and the molding flask (3, 46, 64, 105, 121, 127, 133) and hardening the molten metal (7, 47, 65, 106, 122, 128, 134) to thereby cast a casting (8, 48, 66, 116) that is the inverted mold of the overall casting mold (2, 42, 62, 84, 104, 114, 125) in a state in which the partition sheets (5, 43, 73, 82a, 82b, 82c) are inserted; machining the outer peripheral surface of the casting, removing the partition sheets (5, 43, 73, 82a, 82b, 82c) from the casting, and dividing the casting (8, 48, 66, 116) into piece castings (9, 50, 135); and combining the piece castings (9, 50, 135) so that they have the shape of the inverted mold of the tire in a state in which intervals (10, 68) for venting air, which have a size corresponding to the thickness of the partition sheets (5, 43, 73, 82a, 82b, 82c), are formed between the piece castings (9, 50, 135).

2. A method of manufacturing a tire mold for forming a plurality of partial casting molds (1, 41, 61, 77, 103, 113, 124) each having a shape constituting a part of the surface shape of a tire as its surface shape, forming an overall casting mold (2, 42, 62, 84, 104, 114, 125) by combining the plurality of partial casting molds (1, 41, 61, 77, 103, 113, 124) so that the shape of the tire is formed by the overall casting mold (2, 42, 62, 84, 104, 114, 125), and manufacturing the tire mold that is an inverted mold of the tire by surrounding the overall casting mold (2, 42, 62, 84, 104, 114, 125) by a molding flask (3, 46, 64, 105, 121, 127, 133), pouring a molten metal (7, 47, 65, 106, 122, 128, 134) into the space between the overall casting mold (2, 42, 62, 84, 104, 114, 125) and the casting frame and hardening the molten metal (7, 47, 65, 106, 122, 128, 134), **characterized by** comprising the steps of:

   partitioning the partial casting molds (1, 41, 61, 77, 103, 113, 124) by driving partition cylinders (63, 86) each having a wall thickness of 0.08 mm or less, through ones of the extreme ends thereof, into the profile surfaces of the partial casting molds (1, 41, 61, 77, 103, 113, 124) combined in the shape of the overall casting mold (2, 42, 62, 84, 104, 114, 125) in a direction perpendicular to the profile surfaces of the partial casting molds (1, 41, 61, 77, 103, 113, 124) in a state in which the others of the extreme ends of the partition cylinders (63, 86) are kept at a distance of 10 to 50 mm from the inner surface of the molding flask (3, 46, 64, 105, 121, 127, 133) and fixing the partition cylinders (63, 86) in the partial casting molds (1, 41, 61, 77, 103, 113, 124);

pouring the molten metal (7, 47, 65, 106, 122, 128, 134) into the space between the overall casting mold (2, 42, 62, 84, 104, 114, 125) and the molding flask (3, 46, 64, 105, 121, 127, 133) and hardening the molten metal (7, 47, 65, 106, 122, 128, 134) to thereby cast a casting (8, 48, 66, 116) that is the inverted mold of the overall casting mold (2, 42, 62, 84, 104, 114, 125) in a state in which the partition cylinders (63, 86) are inserted;

machining the outer peripheral surface of the casting (8, 48, 66, 116), removing the partition cylinders (63, 86) from the casting (8, 48, 66, 116), and dividing the casting (8, 48, 66, 116) into piece castings (9, 50, 135); and

combining the piece castings (9, 50, 135) so that they have the shape of the inverted mold of the tire in a state in which intervals (10, 68) for venting air, which have a size corresponding to the thickness of the partition cylinders (63, 86), are formed between the piece castings (9, 50, 135).

3. A method of manufacturing a tire mold according to claim 1 or 2, **characterized in that** each of the partition sheets (5, 43, 73, 82a, 82b, 82c) or the partition cylinders (63, 86) comprises a sheet-like member that is composed of a material, which has a plastic property and is free from melt loss and fuse to the molten metal (7, 47, 65, 106, 122, 128, 134), and that is fixed on the surface of the inserted portion of the partition sheet of the partition cylinder (63, 86) except the portion thereof in the vicinity of the surface of the casting mold.

4. A method of manufacturing a tire mold according to any of claims 1 to 3, **characterized in that** each of the partition sheets (5, 43, 73, 82a, 82b, 82c) or the partition cylinders (63, 86) has positioning member master models (23, 89), which are composed of a material free from melt-loss and fuse to the molten metal (7, 47, 65, 106, 122, 128, 134) and fixed to the partition sheet or the partition cylinder (63, 86) in a state in which the positioning member master models (23, 89) intersect the inserted portion of the partition plate or the partition cylinder (63, 86), piece castings (9, 50, 135) are positioned by inserting positioning members having the same shape as that of the positioning member master models (23, 89) into recessed portions, which are inverted molds of the positioning member master models (23, 89) formed in the casting, and the piece castings (9, 50, 135) are combined with each other so that they are formed in an inverted mold shape of the tire.

5. A method of manufacturing a tire mold according to any of claims 1 to 4, **characterized in that** before the outer peripheral surface of the casting (8, 48, 66, 116) is machined, the circularity of the outer peripheral surface of the casting (8, 48, 66, 116) is corrected by applying external force to the casting (8, 48, 66, 116).

6. A method of manufacturing a tire mold according to any of claims 1 to 5, **characterized in that** before the outer peripheral surface of the casting is machined, the diameter of the casting (8, 48, 66, 116) is expanded and corrected as well as the casting is divided into piece castings (9, 50, 135) by machining the outer peripheral surface thereof and aluminum alloy sheets each having a thickness corresponding to an increased amount of the intervals (10, 68) between the piece castings (9, 50, 135) are fixed to the sides of the piece castings (9, 50, 135).

7. A method of manufacturing a tire mold according to any of claims 1 to 5, **characterized in that** before the outer peripheral surface of the casting is machined, the diameter of the casting (8, 48, 66, 116) is reduced and corrected as well as the casting is divided into piece castings (9, 50, 135) by machining the outer peripheral surface thereof.

8. A method of manufacturing a tire mold according to any of claims 1 to 7, **characterized in that** the partial casting molds (1, 41, 61, 77, 103, 113, 124) comprise a foamed plaster material.

9. A method of manufacturing a tire mold according to any of claims 1 to 8, **characterized in that** the partition sheets (5, 43, 73, 82a, 82b, 82c) or the partition cylinders (63, 86) comprise a steel sheet of a nickel alloy.

10. A method of manufacturing a tire mold according to any of claims 1 to 9, **characterized in that** each of the partition sheets (5, 43, 73, 82a, 82b, 82c) or the partition cylinders (63, 86) has a through hole (19, 44, 51) formed at the inserted portion thereof.

**Patentansprüche**

1. Herstellungsverfahren einer Reifenform für das Ausbilden einer Vielzahl von Teilgussformen (1, 41, 61, 77, 103, 113, 124), von denen jede eine Form, die einen Teil der Flächenform eines Reifens bildet, als ihre Flächenform hat, Ausbilden einer Gesamtgussform (2, 42, 62, 84, 104, 114, 125) durch Kombinieren der Vielzahl von Teilgussformen (1, 41, 61, 77, 103, 113, 124) derart, dass die Form des Reifens durch die Gesamtgussform (2, 42, 62, 84, 104, 114, 125) ausgebildet wird, und Herstellen der Reifenform, das heißt einer umgekehrten Form des Reifens, durch Umgeben der Gesamtgussform (2, 42, 62, 84, 104, 114, 125) mit einem Formenkasten (3, 46, 64, 105, 121, 127, 133), und Gießen eines geschmolzenen Metalls (7, 47, 65, 106, 122, 128, 134) in den Raum zwischen der Gesamtgussform (2, 42, 62, 84, 104, 114, 125) und dem Gussrahmen und Aushärten des geschmolzenen Metalls (7, 47, 65, 106, 122, 128, 134),

**gekennzeichnet durch**

die Schritte:

Unterteilen der Teilgussformen (1, 41, 61, 77, 103, 113, 124) **durch** Vortreiben von Aufteilblechen (5, 43, 73, 82a, 82b, 82c), von denen jedes eine Dicke von 0,08 mm oder weniger besitzt, **durch** eines ihrer äußersten Enden in die Profilflächen der Teilgussformen (1, 41, 61, 77, 103, 113, 124), die in der Form der Gesamtgussform (2, 42, 62, 84, 104, 114, 125) kombiniert sind, in einer Richtung senkrecht zu den Profilflächen der Teilgussformen (1, 41, 61, 77, 103, 113, 124), in einem Zustand, in dem die anderen äußersten Enden der Aufteilbleche (5, 43, 73, 82a, 82b, 82c) bei einem Abstand von 10 bis 50 mm von der Innenfläche des Formenkastens (3, 46, 64, 105, 121, 127, 133) gehalten werden, und Fixieren der Aufteilbleche (5, 43, 73, 82a, 82b, 82c) in den Teilgussformen (1, 41, 61, 77, 103, 113, 124);

Gießen des geschmolzenen Metalls (7, 47, 65, 106, 122, 128, 134) in den Raum zwischen der Gesamtgussform (2, 42, 62, 84, 104, 114, 125) und dem Formenkasten (3, 46, 64, 105, 121, 127, 133) und Aushärten des geschmolzenen Metalls (7, 47, 65, 106, 122, 128, 134), um **dadurch** ein Gussteil (8, 48, 66, 116), das heißt die umgekehrte Form der Gesamtgussform (2, 42, 62, 84, 104, 114, 125), in einem Zustand zu gießen, in dem die Aufteilbleche (5, 43, 73, 82a, 82b, 82c) eingeführt sind;

Bearbeiten der äußeren Umfangsfläche des Gussteils, Entfernen der Aufteilbleche (5, 43, 73, 82a, 82b, 82c) von dem Gussteil und Trennen des Gussteils (8, 48, 66, 106) in Gussteilstücke (9, 50, 135); und

Kombinieren der Gussteilstücke (9, 50, 135) so, dass sie die Form der umgekehrten Form des Reifens in einem Zustand haben, in dem Abstände (10, 68) für das Entlüften, die eine Größe haben, die der Dicke der Aufteilbleche (5, 43, 73, 82a, 82b, 82c) entspricht, zwischen den Gussteilstücken (9, 50, 135) ausgebildet sind.

**2.** Herstellungsverfahren einer Reifenform für das Ausbilden einer Vielzahl von Teilgussformen (1, 41, 61, 77, 103, 113, 124), von denen jede eine Form, die einen Teil der Flächenform eines Reifens bildet, als ihre Flächenform hat, Ausbilden einer Gesamtgussform (2, 42, 62, 84, 104, 114, 125) durch Kombinieren der Vielzahl von Teilgussformen (1, 41, 61, 77, 103, 113, 124) derart, dass die Form des Reifens durch die Gesamtgussform (2, 42, 62, 84, 104, 114, 125) ausgebildet wird, und das Herstellen der Reifenform, das heißt einer umgekehrten Form des Reifens, durch Umgeben der Gesamtgussform (2, 42, 62, 84, 104, 114, 125) mit einem Formenkasten (3, 46, 64, 105, 121, 127, 133), und Gießen eines geschmolzenen Metalls (7, 47, 65, 106, 122, 128, 134) in den Raum zwischen der Gesamtgussform (2, 42, 62, 84, 104, 114, 125) und dem Gussrahmen und Aushärten des geschmolzenen Metalls (7, 47, 65, 106, 122, 128, 134),

**gekennzeichnet durch**

die Schritte:

Unterteilen der Teilgussformen (1, 41, 61, 77, 103, 113, 124) **durch** Vortreiben von Aufteilzylindern (63, 86), von denen jeder eine Dicke von 0,08 mm oder weniger besitzt, **durch** eines ihrer äußersten Enden in die Profilflächen der Teilgussformen (1, 41, 61, 77, 103, 113, 124), die in der Form der Gesamtgussform (2, 42, 62, 84, 104, 114, 125) kombiniert sind, in einer Richtung senkrecht zu den Profilflächen der Teilgussformen (1, 41, 61, 77, 103, 113, 124), in einem Zustand, in dem die anderen äußersten Enden der Aufteilzylinder (63, 86) in einem Abstand von 10 bis 50 mm von der Innenfläche des Formenkastens (3, 46, 64, 105, 121, 127, 133) gehalten werden, und Fixieren der Aufteilzylinder (63, 86) in den Teilgussformen (1, 41, 61, 77, 103, 113, 124);

Gießen des geschmolzenen Metalls (7, 47, 65, 106, 122, 128, 134) in den Raum zwischen der Gesamtgussform (2, 42, 62, 84, 104, 114, 125) und dem Formenkasten (3, 46, 64, 105, 121, 127, 133) und Aushärten des geschmolzenen Metalls (7, 47, 65, 106, 122, 128, 134), um **dadurch** ein Gussteil (8, 48, 66, 116), das heißt die umgekehrte Form der Gesamtgussform (2, 42, 62, 84, 104, 114, 125), in einem Zustand zu gießen, in dem die Aufteilzylinder (63, 86) eingeführt sind;

Bearbeiten der äußeren Umfangsfläche des Gussteils (8, 48, 66, 116), Entfernen der Aufteilzylinder (63, 86) von dem Gussteil (8, 48, 66, 116) und Trennen des Gussteils (8, 48, 66, 106) in Gussteilstücke (9, 50, 135); und

Kombinieren der Gussteilstücke (9, 50, 135) so, dass sie die Form der umgekehrten Form des Reifens in einem Zustand haben, in dem Abstände (10, 68) für das Entlüften, die eine Größe haben, die der Dicke der Aufteilzylinder (63, 86) entspricht, zwischen den Gussteilstücken (9, 50, 135) ausgebildet sind.

3. Herstellungsverfahren einer Reifenform gemäß Anspruch 1 oder 2,
**dadurch gekennzeichnet, dass**
jedes der Aufteilbleche (5, 43, 73, 82a, 82b, 82c) oder jeder der Aufteilzylinder (63, 86) ein blattartiges Element hat, das aus einem Material besteht, das eine plastische Eigenschaft besitzt und frei von Schmelzverlust und Verschmelzung mit dem geschmolzenen Metall (7, 47, 65, 106, 122, 128, 134) ist, und das an der Oberfläche des eingeführten Abschnitts des Aufteilblechs des Aufteilzylinders (63, 86) fixiert wird, bis auf einen Abschnitt von diesem in der Nähe der Oberfläche der Gussform.

4. Herstellungsverfahren einer Reifenform gemäß einem der Ansprüche 1 bis 3,
**dadurch gekennzeichnet, dass**
jedes der Aufteilbleche (5, 43, 73, 82a, 82b, 82c) oder jeder der Aufteilzylinder (63, 86) Positionierungselemente-Mutterformen (23, 89) hat, die aus einem Material besteht, das frei von Schmelzverlust und Verschmelzung mit dem geschmolzenen Metall (7, 47, 65, 106, 122, 128, 134) ist, und an dem Aufteilblech oder dem Aufteilzylinder (63, 86) in einem Zustand fixiert werden, in dem die Positionierungselemente-Mutterformen (23, 89) den eingefügten Abschnitt der Aufteilplatte oder des Aufteilzylinders (63, 86) schneiden, wobei Gussteilstücke (9, 50, 135) durch Einführen von Positionierungselementen, die die selbe Form haben wie die der Positionierungselemente-Mutterformen (23, 89), in die ausgesparten Abschnitte positioniert werden, die umgekehrte Formen der Positionierungselemente-Mutterformen (23, 89) sind, die in dem Gussteil ausgebildet sind, und die Gussteilstücke (9, 50, 135) so miteinander kombiniert werden, dass sie in einer umgekehrten Gussform des Reifens ausgebildet werden.

5. Herstellungsverfahren einer Reifenform gemäß einem der Ansprüche 1 bis 4,
**dadurch gekennzeichnet, dass**
bevor die äußere Umfangsfläche des Gussteils (8, 48, 66, 116) bearbeitet wird, die Rundheit der äußeren Umfangsfläche des Gussteils (8, 48, 66, 116) durch Aufbringen einer externen Kraft auf das Gussteil (8, 48, 66, 116) korrigiert wird.

6. Herstellungsverfahren einer Reifenform gemäß einem der Ansprüche 1 bis 5,
**dadurch gekennzeichnet, dass**
bevor die äußeren Umfangsfläche des Gussteils bearbeitet wird, der Durchmesser des Gussteils (8, 48, 66, 116) aufgeweitet und korrigiert wird, sowie auch das Gussteil in Gussteilstücke (9, 50, 135) geteilt wird, indem seine äußere Umfangsfläche bearbeitet wird, und Bleche aus Aluminiumlegierung, die je eine Dicke haben, die einem vergrößerten Betrag der Abstände (10, 68) zwischen den Gussteilstücken (9, 50, 135) entsprechen, an den Seiten der Gussteilstücke (9, 50, 135) fixiert werden.

7. Herstellungsverfahren einer Reifenform gemäß einem der Ansprüche 1 bis 5,
**dadurch gekennzeichnet, dass**
bevor die äußere Umfangsfläche des Gussteils bearbeitet wird, der Durchmesser des Gussteils (8, 48, 66, 116) verringert und korrigiert wird, sowie auch das Gussteil in Gussteilstücke (9, 50, 135) geteilt wird, indem seine äußere Umfangsfläche bearbeitet wird.

8. Herstellungsverfahren einer Reifenform gemäß einem der Ansprüche 1 bis 7,
**dadurch gekennzeichnet, dass**
die Teilgussformen (1, 41, 61, 77, 103, 113, 124) ein geschäumtes Gipsmaterial aufweisen.

9. Herstellungsverfahren einer Reifenform gemäß einem der Ansprüche 1 bis 8,
**dadurch gekennzeichnet, dass**
die Aufteilbleche (5, 43, 73, 82a, 82b, 82c) oder die Aufteilzylinder (63, 86) ein Stahlblech oder eine Nickellegierung aufweisen.

10. Herstellungsverfahren einer Reifenform gemäß einem der Ansprüche 1 bis 9,
**dadurch gekennzeichnet, dass**
jedes der Aufteilbleche (5, 43, 73, 82a, 82b, 82c) oder jeder der Aufteilzylinder (63, 86) ein Durchgangsloch (19, 44, 51) hat, das an seinem eingeführten Abschnitt ausgebildet wird.

**Revendications**

1. Procédé permettant de fabriquer un moule pour pneumatiques pour former une pluralité de moules de moulage partiels (1, 41, 61, 77, 103, 113, 124) ayant chacun une forme constituant une partie de la forme de surface d'un pneu en tant que sa forme de surface, former un moule de moulage global (2, 42, 62, 84, 104, 114, 125) en combinant la pluralité de moules de moulage partiels (1, 41, 61, 77, 103, 113, 124) de sorte que la forme du pneu est formée par le moule de moulage global (2, 42, 62, 84, 104, 114, 125), et
fabriquer le moule pour pneumatiques qui est un moule inversé du pneu en entourant le moule de moulage global (2, 42, 62, 84, 104, 114, 125) par un châssis de moulage (3, 46, 64, 105, 121, 127, 133) et verser un métal en fusion (7, 47, 65, 106, 122, 128, 134) dans l'espace situé entre le moule de moulage global (2, 42, 62, 84, 104, 114, 125) et le châssis de moulage et faire durcir le métal en fusion (7, 47, 65, 106, 122, 128, 134), **caractérisé en ce qu'**il comprend les étapes consistant à :

séparer les moules de moulage partiels (1, 41, 61, 77, 103, 113, 124) en entraînant les plaques de séparation (5, 43, 73, 82a, 82b, 82c) ayant chacune une épaisseur de 0,08 mm ou moins, à travers certaines de leurs extrémités, dans les surfaces de profil des moules de moulage partiels (1, 41, 61, 77, 103, 113, 124) combinées selon la forme du moule de moulage global (2, 42, 62, 84, 104, 114, 125) dans une direction perpendiculaire aux surfaces de profil des moules de moulage partiels (1, 41, 61, 77, 103, 113, 124) dans un état dans lequel les autres extrémités des plaques de séparation (5, 43, 73, 82a, 82b, 82c) sont maintenues à une distance de 10 à 50 mm de la surface interne du châssis de moulage (3, 46, 64, 105, 121, 127, 133) et fixer les plaques de séparation (5, 43, 73, 82a, 82b, 82c) dans les moules de moulage partiels (1, 41, 61, 77, 103, 113, 124) ;

verser le métal en fusion (7, 47, 65, 106, 122, 128, 134) dans l'espace situé entre le moule de moulage global (2, 42, 62, 84, 104, 114, 125) et le châssis de moulage (3, 46, 64, 105, 121, 127, 133) et faire durcir le métal en fusion (7, 47, 65, 106, 122, 128, 134) pour mouler ainsi une pièce moulée (8, 48, 66, 116) qui est le moule inversé du moule de moulage global (2, 42, 62, 84, 104, 114, 125) dans un état dans lequel les plaques de séparation (5, 43, 73, 82a, 82b, 82c) sont insérées ;

usiner la surface périphérique externe de la pièce moulée, retirer les plaques de séparation (5, 43, 73, 82a, 82b, 82c) de la pièce moulée, et diviser la pièce moulée (8, 48, 66, 116) en parties de pièce moulée (9, 50, 135) ; et

combiner les parties de pièce moulée (9, 50, 135) de sorte qu'elles ont la forme du moule inversé du pneu dans un état dans lequel des intervalles (10, 68) pour évacuer l'air, qui ont une taille correspondant à l'épaisseur des plaques de séparation (5, 43, 73, 82a, 82b, 82c), sont formés entre les parties de pièce moulée (9, 50, 135).

2. Procédé permettant de fabriquer un moule pour pneumatiques pour former une pluralité de moules de moulage partiels (1, 41, 61, 77, 103, 113, 124) ayant chacun une forme constituant une partie de la forme de surface d'un pneu en tant que sa forme de surface, former un moule de moulage global (2, 42, 62, 84, 104, 114, 125) en combinant la pluralité de moules de moulage partiels (1, 41, 61, 77, 103, 113, 124) de sorte que la forme du pneu est formée par le moule de moulage global (2, 42, 62, 84, 104, 114, 125) et

fabriquer le moule pour pneumatiques qui est un moule inversé du pneu en entourant le moule de moulage global (2, 42, 62, 84, 104, 114, 125) par un châssis de moulage (3, 46, 64, 105, 121, 127, 133), verser un métal en fusion (7, 47, 65, 106, 122, 128, 134) dans l'espace situé entre le moule de moulage global (2, 42, 62, 84, 104, 114, 125) et le châssis de moulage et faire durcir le métal en fusion (7, 47, 65, 106, 122, 128, 134), **caractérisé en ce qu'**il comprend les étapes consistant à :

séparer les moules de moulage partiels (1, 41, 61, 77, 103, 113, 124) en entraînant des cylindres de séparation (63, 86) ayant chacun une épaisseur de paroi de 0,08 mm ou moins, à travers certaines de leurs extrémités, dans les surfaces de profil des moules de moulage partiels (1, 41, 61, 77, 103, 113, 124) combinés selon la forme du moule de moulage global (2, 42, 62, 84, 104, 114, 125) dans une direction perpendiculaire aux surfaces de profil des moules de moulage partiels (1, 41, 61, 77, 103, 113, 124) dans un état dans lequel les autres extrémités des cylindres de séparation (63, 86) sont maintenues à une distance de 10 à 50 mm de la surface interne du châssis de moulage (3, 46, 64, 105, 121, 127, 133) et fixer les cylindres de séparation (63, 86) dans les moules de moulage partiels (1, 41, 61, 77, 103, 113, 124) ;

verser le métal en fusion (7, 47, 65, 106, 122, 128, 134) dans l'espace situé entre le moule de moulage global (2, 42, 62, 84, 104, 114, 125) et le châssis du moulage (3, 46, 64, 105, 121, 127, 133) et faire durcir le métal en fusion (7, 47, 65, 106, 122, 128, 134) pour mouler ainsi une pièce moulée (8, 48, 66, 116) qui est le moule inversé du moule de moulage global (2, 42, 62, 84, 104, 114, 125) dans un état dans lequel les cylindres de séparation (63, 86) sont insérés ;

usiner la surface périphérique externe de la pièce moulée (8, 48, 66, 116), retirer les cylindres de séparation (63, 86) de la pièce moulée (8, 48, 66, 116) et diviser la pièce moulée (8, 48, 66, 116) en parties de pièce moulée (9, 50, 135) ; et

combiner les parties de pièce moulée (9, 50, 135) de sorte qu'elles ont la forme du moule inversé du pneu dans un état dans lequel les intervalles (10, 68) pour évacuer l'air, qui ont une taille correspondant à l'épaisseur des cylindres de séparation (63, 86), sont formés entre les parties de pièce moulée (9, 50, 135).

3. Procédé permettant de fabriquer un moule pour pneumatiques selon la revendication 1 ou 2, **caractérisé en ce que** chacune des plaques de séparation (5, 43, 73, 82a, 82b, 82c) ou chacun des cylindres de séparation (63, 86) comprend un élément en forme de plaque qui est composé d'un matériau, qui a une propriété plastique et est dépourvu de perte de fusion et fond sur le métal en fusion (7, 47, 65, 106, 122, 128, 134), et qui est fixé sur la surface de la partie insérée de la plaque de séparation du cylindre de séparation (63, 86) excepté sa partie située à proximité de la surface du moule de moulage.

4. Procédé permettant de fabriquer un moule pour pneumatiques selon l'une quelconque des revendications 1 à 3, **caractérisé en ce que** chacune des plaques de séparation (5, 43, 73, 82a, 82b, 82c) ou chacun des cylindres de séparation (63, 86) a des modèles maîtres d'élément de positionnement (23, 89), qui sont composés d'un matériau dépourvu de perte de fusion et fond sur le métal en fusion (7, 47, 65, 106, 122, 128, 134) et fixés sur la plaque de séparation ou cylindre de séparation (63, 86) dans un état dans lequel les modèles maîtres d'élément de positionnement (23, 89) coupent la partie insérée de la plaque de séparation ou cylindre de séparation (63, 86), les parties de pièce moulée (9, 50, 135) sont positionnées en insérant les éléments de positionnement ayant la même forme que celle des modèles maîtres d'élément de positionnement (23, 89) dans des parties enfoncées, qui sont des moules inversés des modèles maîtres d'élément de positionnement (23, 89) formés dans la pièce moulée, et les parties de pièce moulée (9, 50, 135) sont combinées entre elles de sorte qu'elles sont formées selon une forme de moule inversé du pneu.

5. Procédé permettant de fabriquer un moule pour pneumatiques selon l'une quelconque des revendications 1 à 4, **caractérisé en ce qu'**avant que la surface périphérique externe de la pièce moulée (8, 48, 66, 116) ne soit usinée, la circularité de la surface périphérique externe de la pièce moulée (8, 48, 66, 116) est corrigée en appliquant une force externe sur la pièce moulée (8, 48, 66, 116).

6. Procédé permettant de fabriquer un moule pour pneumatiques selon l'une quelconque des revendications 1 à 5, **caractérisé en ce qu'**avant que la surface périphérique externe de la pièce moulée ne soit usinée, le diamètre de la pièce moulée (8, 48, 66, 116) est agrandi et corrigé de même que la pièce moulée est divisée en parties de pièce moulée (9, 50, 135) en usinant sa surface périphérique externe et des plaques en alliage d'aluminium ayant chacune une épaisseur correspondant à une quantité augmentée des intervalles (10, 68) situés entre les parties de pièce moulée (9, 50, 135) sont fixées sur les côtés des parties de pièce moulée (9, 50, 135).

7. Procédé permettant de fabriquer un moule pour pneumatiques selon l'une quelconque des revendications 1 à 5, **caractérisé en ce qu'**avant que la surface périphérique externe de la pièce moulée ne soit usinée, le diamètre de la pièce moulée (8, 48, 66, 116) est réduit et corrigé de même que la pièce moulée est divisée en parties de pièce moulée (9, 50, 135) en usinant sa surface périphérique externe.

8. Procédé permettant de fabriquer un moule pour pneumatiques selon l'une quelconque des revendications 1 à 7, **caractérisé en ce que** les moules de moulage partiels (1, 41, 61, 77, 103, 113, 124) comprennent un matériau en plâtre expansé.

9. Procédé permettant de fabriquer un moule pour pneumatiques selon l'une quelconque des revendications 1 à 8, **caractérisé en ce que** les plaques de séparation (5, 43, 73, 82a, 82b, 82c) ou les cylindres de séparation (63, 86) comprennent une plaque d'acier réalisée à partir d'un alliage de nickel.

10. Procédé permettant de fabriquer un moule pour pneumatiques selon l'une quelconque des revendications 1 à 9, **caractérisé en ce que** chacune des plaques de séparation (5, 43, 73, 82a, 82b, 82c) ou chacun des cylindres de séparation (63, 86) a un trou débouchant (19, 44, 51) formé au niveau de sa partie insérée.

FIG.1(a)

FIG.1(b)

FIG.1(c)

FIG.1(d)

FIG.2(a)

FIG.2(b)

FIG.2(c)

FIG.2(d)

FIG.2(e)

FIG.2(f)

FIG.2(g)

FIG.3(a)

FIG.3(b)

FIG.3(c)

FIG.3(d)

FIG.3(e)

FIG.3(f)

FIG.4(a)

FIG.4(b)

FIG.4(c)

FIG.4(d)

FIG.4(e)

FIG.4(f)     FIG.4(g)

FIG.5(a)          FIG.5(b)

FIG.6

FIG.7

FIG.8

FIG.9(a)  FIG.9(b)

FIG.10

5

FIG.11

9

2 0

FIG.12(a)

A

9

FIG.12(b)

B

9

FIG.13(a)

FIG.13(b)

FIG.14

FIG.15

FIG.16

FIG.17

FIG.18

FIG.19(a)

FIG.19(b)

FIG.20

FIG.21(a)

FIG.21(b)

FIG.21(c)

FIG.22

T0

9

T1

FIG.23

2 2

2 9

9

<T0

<T0

T0

T1－T0

FIG.24

2 9

9

FIG.25(a)

FIG.25(b)

FIG.25(c)

FIG.26(a)

FIG.26(b)

FIG.26(c)

FIG.26(d)

FIG.26(e)

FIG.26(f)

FIG.26(g)

FIG.26(h)

FIG.27(a)

FIG.27(b)

FIG.27(c)

FIG.27(d)

FIG.27(e)

FIG.27(f)

FIG.27(g)

FIG.27(h)

FIG.28

6 9

7 0

FIG.29

6 2

7 0

6 3   7 1

FIG.30

FIG.31

FIG.32(a)                    FIG.32(b)

**FIG.33(a)**

**FIG.33(b)**

**FIG.34(a)**

**FIG.34(b)**

FIG.35

30mm

8 6

8 7

30mm

60~70mm

FIG.36(a)

8 4

8 6

≈45°

FIG.36(b)

8 6

8 4

FIG.37(a)

FIG.37(b)

FIG.38(a)

FIG.38(b)

FIG.39(a)

FIG.39(b)

FIG.40(a)

FIG.40(b)

FIG.41

FIG.42

FIG.43(a) FIG.43(b) FIG.43(c) FIG.43(d) FIG.43(e)

FIG.43(f) FIG.43(g) FIG.43(h)

FIG.44(a)    FIG.44(b)    FIG.44(c)    FIG.44(d)    FIG.44(e)

FIG.44(g)

FIG.44(f)

FIG.44(h)    FIG.44(i)    FIG.44(j)

FIG.45(a)

FIG.45(b)

FIG.45(c)

FIG.45(d)

FIG.45(e)

FIG.45(f)

FIG.45(g)

EP 1 380 398 B1

FIG.46(a)　　FIG.46(b)

FIG.46(c)　FIG.46(d)

FIG.46(e)

FIG.46(f)

FIG.47